# EUROPEAN PATENT SPECIFICATION

(11) **EP 2 858 263 B1**
(45) Date of publication and mention of the grant of the patent: **10.05.2017**
(21) Application number: 12878014.5
(22) Date of filing: 30.05.2012
(51) Int. Cl.: H04B 7/04, H04W 76/02

(54) **CONFIGURATION METHOD OF MULTIFLOW TRANSMISSION, BASE STATION, RADIO NETWORK CONTROLLER AND USER EQUIPMENT**
KONFIGURATIONSVERFAHREN FÜR MEHRSTROMÜBERTRAGUNG, BASISSTATION, FUNKNETZSTEUEREINHEIT UND BENUTZERVORRICHTUNG
PROCÉDÉ DE CONFIGURATION DE TRANSMISSION MULTIFLUX, STATION DE BASE, CONTRÔLEUR DE RÉSEAU RADIO ET ÉQUIPEMENT UTILISATEUR

(43) Date of publication of application: 08.04.2015
(73) Proprietor: Huawei Technologies Co., Ltd., Longgang District Shenzhen, Guangdong 518129 (CN)
(72) Inventor: CHEN, Jun, Shenzhen Guangdong 518129 (CN)
(74) Representative: Pfenning, Meinig & Partner mbB
(86) International application number: PCT/CN2012/076300
(87) International publication number: WO 2013/177768

(56) References cited:
- EP-A1- 1 821 471
- EP-A1- 1 942 614
- EP-A2- 2 086 265
- WO-A2-2005/112357
- CN-A- 101 931 439
- CN-A- 101 932 091
- CN-A- 102 013 903
- US-A1- 2007 123 257
- US-A1- 2008 049 656

## Description

### TECHNICAL FIELD

Embodiments of the present application relate to the field of communication technologies, and in particular, to a method for configuring multiflow, a base station, a radio network controller, and a user equipment.

### BACKGROUND

With the booming increase of data services, conventional macro base stations and macro cells (Macro Cell, Mcell) are incapable of providing more capacity to more and more UE (User Equipment, UE), and as a result, micro base stations or small cells (Small Cell, Scell) or micro cells (Micro Cell) appear and are configured to effectively increase the network capacity. Generally, in a macro cell, a plurality of micro base stations may be deployed, where the coverage of small cells corresponding to micro base stations is smaller than the coverage of macro cells corresponding to macro base stations. For example, in a homogeneous network (Homogeneous network), micro base stations of different types or different standards such as base stations or transmitting/receiving nodes with low transmission power, including pico (Pico) base stations, home (Home) base stations, femto (femto) base stations, repeater stations, remote radio heads (Remote Radio Head, RRH), may be deployed to enhance the network coverage and performance, and such a network structure is called a heterogeneous network (Heterogeneous network). A small cell may further improve data service experience of a user, and a macro cell is generally configured for an overall coverage, ensuring a coverage for real-time services of a user and providing data services with low rates. The frequency point of a small cell and the frequency point of a macro cell may be the same or different. The scenario where a plurality of micro base stations are deployed in a macro cell may include the following two types: 1) a macro cell may adopt frequency point 1, while a plurality of small cells in the macro cell may adopt frequency point 2; and 2) a macro cell and a plurality of small cells in the macro cell both adopt the same frequency point.

Universal Mobile Telecommunications System (Universal Mobile Telecommunications System, UMTS) release 5 (Rel-5) has introduced the High Speed Downlink Packet Access (High Speed Downlink Packet Access, HSDPA) technology, further increasing peak throughput of a UE and cell and cell throughput. After HSDPA is configured on a UE, a high speed downlink shared channel (High-Speed Downlink Shared Channel, HS-DSCH) serving cell is configured, and all the HSDPA physical channels of the UE such as high speed-shared control channels (High Speed-Shared Control Channel, HS-SCCH) and high speed-dedicated physical control channels (High Speed-Dedicated Physical Control Channel, HS-DPCCH) are established on the HS-DSCH serving cell. After the HSDPA technology is introduced to Rel-5, because there is only one HS-DSCH serving cell, after a UE moves from the current serving cell to a new cell, an HS-DSCH serving cell change is triggered. A serving cell change is completed mainly through radio resources control (Radio Resource Control, RRC) signaling, which requires signaling exchange between a macro base station and a radio network controller (Radio Network Controller, RNC) and signaling exchange between the RNC and a UE.

The UMTS technology is evolved to release 11 (Rel-11), a multiflow (multiflow) transmission technology is introduced and the multiflow technology allows configuring a plurality of cells with the same frequency point or different frequency points as HS-DSCH serving cells of a UE, thereby apparently increasing user experience. The multiflow technology is configured only when a UE is in the edge area of a cell, that is, the network side may perform multiflow configuration only when a UE is in a soft handover or softer handover state, where the soft handover state refers to that the UE is in a common coverage area of two cells with the same frequency point under different base stations, and the softer handover state refers to that the UE is in a common coverage area of two cells with the same frequency point under a same base station. In the multiflow technology, because the number of HS-DSCH serving cells exceeds one, the downlink throughput of a UE can be improved in a better way.

When a UE moves in the scenario with small cells, the following problems may occur: small cells may not be adjacent to each other or have less overlapped areas, which leads to many hard handovers, thereby affecting user experience; according to the existing mobility process, if a UE moves frequently between different small cells, much RRC signaling will be triggered, which consumes many processing resources on the network side and brings risks of potential call drops.

EP 1821471 A1 recites a communication node includes a two-hop neighbor management portion, a routing table management portion, and a multi-path establishment portion. The two-hop neighbor management portion manages a plurality of neighbor routes to a communication node that can be reached by two hops. The routing table management portion stores a routing table for performing routing within a network. The multi-path establishment portion establishes spare routes by, when the number of hops from a destination node to an own node is a multiple of two on a standard route, identifying neighbor routes to a specific node among a plurality of neighbor routes managed by the neighbor management portion and by adding them to the routing table.

EP 1942614 A1 recites a method and mobile ad hoc network (10) include the use of a plurality of mobile nodes (12). A main communication path (M) is established from a source node (5) through intermediate nodes to a destination node (D). Alternative communication paths (14) are established among intermediate nodes defined as standby nodes to define a multipath communication pathway from the source node (S) to the destination node (D). The nodes include a controller and a wireless communications device cooperating therewith. Link quality is monitored by at least one intermediate node to neighboring nodes in the multipath communication pathway, and the main communication path (M) is reconfigured within the multipath communication pathway to at least one of the alternative communication paths (14) based upon monitored link quality

WO 2005112357 A2 recites a method and apparatus for forwarding non-consecutive data blocks in enhanced uplink (EU) transmissions. A wireless transmit/receive unit (WTRU) and one or more Node-Bs include one or more automatic repeat request (ARQ)/hybrid-ARQ (H-ARQ) processes for supporting an enhanced dedicated channel (E-DCH). Data blocks transmitted by the WTRU are re-ordered in a re-ordering entity located in the Node-B(s) or a radio network controller (RNC). Once a missing data block is identified, a data forwarding timer in the Node-B(s) or RNC is initiated and subsequent WTRU transmissions are monitored to determine whether the missing data block has been discarded by the WTRU. Upon recognition of the discard of the missing data block, the non-consecutive data blocks are forwarded to higher layers.

US 2007123257 A1 recites a method for transferring service for a mobile station call signal from a first base transceiver station to a second base transceiver station in a wireless mobile telecommunication system, while a call is in progress. The method can include receiving at a base transceiver station an access burst from a mobile station with a call already in progress and requiring service from the base transceiver station. Based on the received access burst, the base transceiver station can electronically steer a beam of an adaptive antenna array of the base transceiver station toward a location of the mobile station.

EP 2086265 A2 recites a disclosed base station apparatus used in mobile communication system, where data are transmitted and received using shared channels, includes a signal generating unit for generating a within-range check signal used to determine, after a mobile station apparatus present in a coverage of the base station apparatus has entered into a discontinuous reception mode (DRX) and/or a discontinuous transmission mode (DTX), whether the mobile station apparatus is present in the coverage; a signal transmission control unit for controlling transmission of the within-range check signal so that the within-range check signal is transmitted to the mobile station apparatus upon passage of a predetermined time while the mobile station apparatus remains in the DRX and/or DTX; and a determining unit for determining the presence of the mobile station apparatus in the coverage if response to the within-range check signal is returned, and determine absence from the coverage if no response is returned.

US 2008049656 A1 recites an apparatus and a method for filtering a broadcast message in a wireless network access equipment is discussed. The method includes searching for a registered communication terminal that should respond to a received broadcast message; checking whether the received broadcast message forwarding to the searched communication terminal requires a response; and transmitting a response instead to the communication terminal when the received broadcast message requires a response.

### SUMMARY

A plurality of aspects in the present application provide a method for configuring multiflow, a base station, a radio network controller, and a user equipment, which are capable of reducing signaling exchange for a system, so as to reduce the system resource consumption.

In one aspect, a method for configuring multiflow is provided, including: receiving, by a second base station, a first check instruction sent by a first radio network controller, where the first check instruction includes identification information of a UE that has established a connection with a first base station and the first base station is controlled by the first radio network controller; checking, by the second base station, whether the UE is in a coverage area of the second base station according to the first check instruction; informing, by the second base station, the first radio network controller of information that the UE is detected to be in the coverage area of the second base station, so that the first radio network controller performs multiflow configuration according to the check result; and performing, by the second base station, multiflow configuration according to a configuration instruction and multiflow configuration information that are sent by the first radio network controller, so that a cell of the first base station and a cell of the second base station jointly provide multiflow service to the UE as multiflow serving cells.

In another aspect, a method for configuring multiflow is provided, including: in the circumstance that a UE has established a connection with a first base station, sending, by a first radio network controller, a first check instruction to a second base station, where the first base station is controlled by the first radio network controller and the first check instruction includes identification information of the UE, so that the second base station checks whether the UE is in a coverage area of the second base station; and performing, by the first radio network controller, multiflow configuration according to information sent by the UE that the UE is detected to be in the coverage area of the second base station, so that a cell of the first base station and a cell of the second base station jointly provide multiflow service to the UE as multiflow serving cells.

In another aspect, a method for configuring multiflow is provided, including: receiving, by a UE that has established a connection with a first base station, multiflow configuration information from a first radio network controller, where the first base station is controlled by the first radio network controller; receiving, by the UE, physical layer signaling and/or radio resource control layer reconfiguration signaling sent by a second base station, where the physical layer signaling and/or radio resource control layer reconfiguration signaling instructs the UE to perform, according to the multiflow configuration information, multiflow configuration; and performing, by the UE, the multiflow configuration according to the physical layer signaling and/or radio resource control layer reconfiguration signaling and the multiflow configuration information, so as to receive multiflow service provided by a cell of the first base station and a cell of the second base station to the UE as multiflow serving cells.

In another aspect, a base station is provided, including: a receiver, configured to receive a first check instruction sent by a first radio network controller, where the first check instruction includes identification information of a UE that has established a connection with another base station and the another base station is controlled by the first radio network controller; a check processor, configured to check whether the UE is in a coverage area of the base station according to the first check instruction; an informing processor, configured to inform the first radio network controller of information that the UE is detected to be in the coverage area of the second base station, so that the first radio network controller performs multiflow configuration according to the check result; and a configuration processor, configured to perform multiflow configuration according to an instruction of the first RNC, so that cells of the another base station and cells of the base station jointly provide multiflow service to the UE as multiflow serving cells.

In another aspect, a radio network controller is provided, including: a transmitter, configured to: in the circumstance that a UE has established a connection with a first base station, send a first check instruction to a second base station, where the first base station is controlled by the first radio network controller and the first check instruction includes identification information of the UE, so that the second base station checks whether the UE is in a coverage area of the second base station; and a configuration processor, configured to perform multiflow configuration according to information sent by the UE that the UE is detected to be in the coverage area of the second base station, so that a cell of the first base station and a cell of the second base station jointly provide multiflow service to the UE as multiflow serving cells.

In another aspect, a UE is provided, where the UE has established a connection with a first base station, the user equipment including: a receiver, configured to receive multiflow configuration information sent by a first radio network controller, where the first base station is controlled by the first radio network controller, and receive physical layer signaling and/or radio resource control layer reconfiguration signaling sent by a second base station, where the physical layer signaling and/or radio resource control layer reconfiguration signaling instructs the UE to perform, according to the multiflow configuration information, multiflow configuration; and a configuration processor, configured to perform multiflow configuration according to the physical layer signaling and/or radio resource control layer reconfiguration signaling and the multiflow configuration information, so as to receive multiflow service provided by a cell of the first base station and a cell of the second base station to the UE as multiflow serving cells.

In embodiments of the present application, a radio network controller may instruct a second base station to check whether a UE that has established a connection with a first base station is in a coverage area of the second base station, and perform multiflow configuration according to a check result, so that a cell of the first base station and a cell of the second base station jointly provide multiflow service to the UE. Since, according to the embodiments of the present application, when multiflow configuration is performed, less signaling exchange occurs, the system resource consumption is reduced.

### BRIEF DESCRIPTION OF DRAWINGS

To illustrate the technical solutions in the embodiments of the present application more clearly, the following briefly describes the accompanying drawings required for describing the embodiments or the prior art. Apparently, the accompanying drawings merely show some embodiments of the present application, and a person of ordinary skill in the art can derive other drawings from these accompanying drawings without creative efforts.
FIG. 1A is a schematic diagram of a communication system according to Embodiment 1 of the present application;
FIG. 1B is a schematic diagram of a communication system according to Embodiment 2 of the present application;
FIG. 2 is a schematic flowchart of a method for configuring multiflow according to Embodiment 3 of the present application;
FIG. 3 is a schematic flowchart of a method for configuring multiflow according to Embodiment 4 of the present application.
FIG. 4 is a schematic flowchart of a method for configuring multiflow according to Embodiment 5 of the present application;
FIG. 5 is a schematic flowchart of a multiflow configuration process according to Embodiment 6 of the present application;
FIG. 6 is a schematic flowchart of a multiflow configuration process according to Embodiment 7 of the present application;
FIG. 7 is a schematic flowchart of a multiflow configuration process according to Embodiment 8 of the present application;
FIG. 8 is a schematic flowchart of a multiflow configuration process according to Embodiment 9 of the present application;
FIG. 9 is a schematic structural diagram of a base station according to Embodiment 10 of the present application;
FIG. 10 is a schematic structural diagram of a radio network controller according to Embodiment 11 of the present application;
FIG. 11 is a schematic structural diagram of a radio network controller according to Embodiment 12 of the present application; and
FIG. 12 is a schematic structural diagram of a UE according to Embodiment 13 of the present application.

### DESCRIPTION OF EMBODIMENTS

The following clearly and completely describes the technical solutions in the embodiments of the present application with reference to the accompanying drawings in the embodiments of the present application. Apparently, the described embodiments are a part rather than all of the embodiments of the present application. All other embodiments obtained by a person of ordinary skill in the art based on the embodiments of the present application without creative efforts shall fall within the protection scope of the present application.

It should be understood that, the technical solutions according to the present application may be applied to various communication systems, for example, a GSM (Global System of Mobile communication, Global System of Mobile Communication) system, a CDMA (Code Division Multiple Access, Code Division Multiple Access) system, a WCDMA (Wideband Code Division Multiple Access, Wideband Code Division Multiple Access) system, a GPRS (General Packet Radio Service, General Packet Radio Service), an LTE (Long Term Evolution, Long Term Evolution) system, an LTE-A (Advanced long term evolution, advanced long term evolution) system, a UMTS (Universal Mobile Telecommunication System, Universal Mobile Telecommunication System), and the like, which is not limited in the embodiments of the present application; however, for the convenience of description, the embodiments of the present application will be described by taking a WCDMA system as an example.

The embodiments of the present application may be used in radio networks of different standards. A radio access network may include different network elements in different systems. For example, the network element of a radio access network in LTE and LTE-A includes an eNB (eNodeB, evolved base station), while the network element of a radio access network in WCDMA includes an RNC (Radio Network Controller, radio network controller) and a NodeB. Similarly, other radio networks such as WiMax (Worldwide Interoperability for Microwave Access, Worldwide Interoperability For Microwave Access) may also use solutions similar to the embodiments of the present application, where relevant modules in the base station system may be different, which is not limited in the embodiment of the present application; however, for the convenience of description, the following embodiments will be described by taking a NodeB as an example.

According to the embodiments of the present invention, micro base stations may include Pico base stations, Home base stations, femto base stations, repeater stations, RRHs and other micro base stations with low transmission power. The embodiments of the present invention take a heterogeneous network deployed with a macro base station and a micro base station as an example for description, which, however, is not limited the embodiments in the present invention. For example, when the micro base station is an RRH, the embodiments in the present invention are also applicable to the scenario.

It should be further understood that, in the embodiments of the present application, a user equipment (UE, User Equipment) includes but is not limited to a mobile station (MS, Mobile Station), a mobile terminal (Mobile Terminal), a mobile telephone (Mobile Telephone), a handset (handset) and portable equipment (portable equipment), and the user equipment, such as a computer, may communicate with one or more core networks by using a radio access network (RAN, Radio Access Network). The user equipment may further be a portable, pocket-sized, handheld, computer-integrated or vehicle-mounted mobile device. The use equipment may be a mobile phone (or referred to as a "cellular" phone), or a computer with a wireless communication function, or a portable, pocket-sized, handheld, computer-integrated or vehicle-mounted mobile device.

In addition, the terms "system" and "network" in this document can always be exchanged for use in this document. The term "and/or" in this document is only an association relationship for describing the associated objects, and represents that three relationships may exist, for example, A and/or B may represent the following three cases: A exists separately, both A and B exist, and B exists separately. In addition, the character "/" in this document usually represents that the former and later associated objects are in a "or" relationship.

Multiflow refers to a circumstance in which a UE is capable of receiving downlink HS-DSCH data in at least two cells with at least one frequency point and the network side is capable of scheduling downlink HS-DSCH data in at least two cells with at least one frequency point. For example, base station 1 has cell 1, cell 2, and cell 3, which are all on frequency point 1, and in this circumstance, if coverage areas of cell 1 and cell 2 overlap, multiflow may be performed in cell 1 and cell 2. For example, base station 1 has cell 1, cell 2, cell 3, cell 4, cell 5, and cell 6, where cell 1, cell 2, and cell 3 are on frequency point 1 and cell 4, cell 5, and cell 6 are on frequency point 2, and if coverage areas of cell 1 and cell 2 overlap with coverage areas of cell 4 and cell 5, multiflow may be performed in cell 1, cell 2, cell 4, and cell 5. For another example, base station 1 has cell 1 and base station 2 has cell 2, and if coverage areas of cell 1 and cell 2 overlap, multiflow may be performed in cell 1 and cell 2.

It should be understood that in the embodiments of the present application, a first base station and a second base station may be separated logically, but physically they may belong to different base stations or the same base station.

In order to further raise the value of the multiflow technology, applying the multiflow technology to scenarios with small cells may be considered, that is, to combine at least one macro cell with at least one small cell to schedule downlink data for a user, which may solve the hard handover problem that occurs when a UE moves between small cells, further increasing data service experience of the user, and not affecting real-time services of the user apparently.

If a macro cell serves as a serving cell for multiflow while small cells serve as auxiliary serving cells for multiflow, because small cells are generally not adjacent to each other, when a UE moves between different small cells, more measurement needs to be performed and more RRC signaling is triggered in the circumstance of checking small cells with a conventional measurement process, resulting in a large consumption of air interface resources. According to a conventional mechanism, if a UE fails to send uplink RRC signaling, a call drop will occur, thereby triggering over much air interface RRC signaling, increasing the rate of call drops, which apparently affects user experience (especially in real-time voice services).

The multiflow configuration process in scenarios with small cells is optimized according to the embodiments of the present application, expecting that when increasing the throughput rate of a UE, signaling exchange on the network side will not be largely affected.

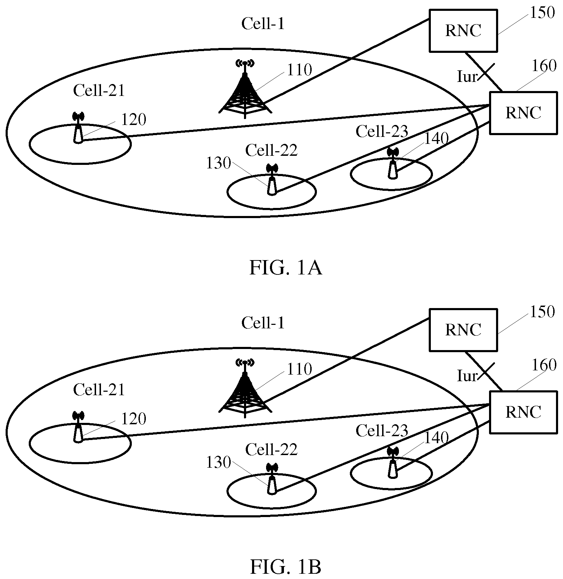

FIG. 1A is a schematic diagram of a communication system according to Embodiment 1 of the present application. Referring to FIG. 1A, the cell Cell-1 of macro base station 110 is a macro cell, which ensures user experience in real-time services (such as voice services) through a broad coverage; the cell Cell-21 of micro base station 120, the cell Cell-22 of micro base station 130, and the cell Cell-23 of micro base station 140 are small cells, which are in charge of hotspot covering in their respective coverage areas, increasing user experience in data services. Macro base station 110, micro base station 120, micro base station 130, and micro base station 140 may be controlled by RNC 150. When a UE is in the coverage areas of these hotspots, it may be better served in the aspect of data services. For example, when the UE is in the coverage areas of Cell-21 and Cell-1, configuring Cell-21 and Cell-1 as the HS-DSCH serving cells for the UE may be considered, where besides ensuring the experience of the UE in real-time services, the throughput rate of data services may be further increased, thereby increasing user experience.

FIG. 1B is a schematic diagram of a communication system according to Embodiment 2 of the present application. Referring to FIG. 1B, unlike the embodiment shown in FIG. 1A, in the embodiment shown in FIG. 1B, micro base station 120, micro base station 130, and micro base station 140 may be controlled by RNC 160, and in this circumstance, RNC 150 and RNC 160 may communicate with each other through an Iur port.

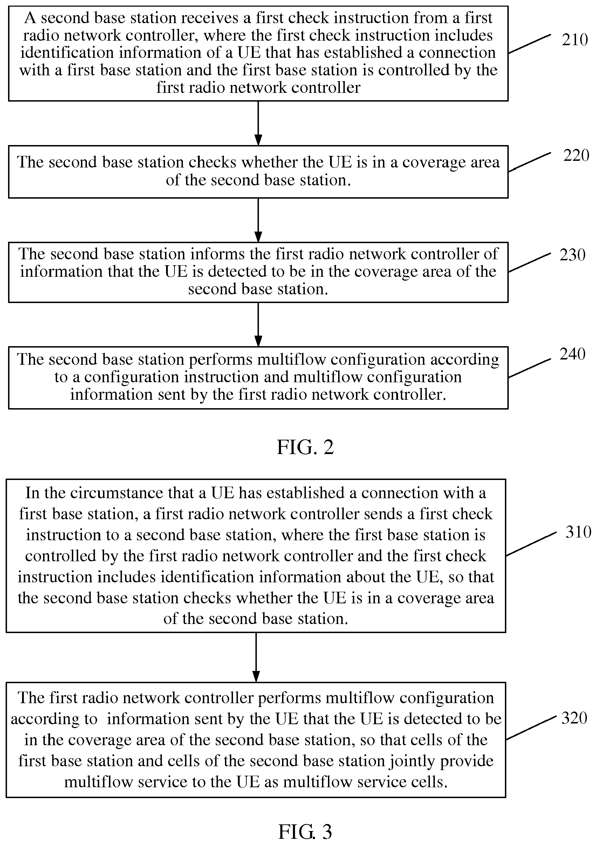

FIG. 2 is a schematic flowchart of a method for configuring multiflow according to Embodiment 3 of the present application.

Step 210: A second base station receives a first check instruction from a first radio network controller, where the first check instruction includes identification information of a UE that has established a connection with a first base station and the first base station is controlled by the first radio network controller.

Step 220: The second base station checks whether the UE is in a coverage area of the second base station according to the first check instruction.

Step 230: The second base station informs the first radio network controller of information that the UE is detected to be in the coverage area of the second base station, so that the first radio network controller performs multiflow configuration according to the check result.

Step 240: The second base station performs multiflow configuration according to a configuration instruction and multiflow configuration information that are sent by the first radio network controller, so that a cell of the first base station and a cell of the second base station jointly provide multiflow service to the UE as multiflow serving cells.

The following takes a first base station as a macro base station, a second base station as a micro base station, and a first radio network controller as an RNC, and specifically describes the embodiment of the present application.

For example, an RNC may control a plurality of base stations, and the RNC may communicate with these base stations through Iub interfaces, that is, the RNC terminates the Iub interfaces to directions of these base stations, and the RNC is configured to manage the load control, congestion control and acceptance control for cells that belong to these base stations. A base station controlled by the RNC may be a macro base station or a micro base station. According to the embodiment of the present invention, a macro base station may be controlled by the RNC, while a micro base station may be controlled by the RNC or another RNC.

According to the embodiment of the present invention, multiflow may refer to that a plurality of serving cells have established connections with a UE and perform transmission of a plurality of data flows for the UE. For example, multiflow may refer to that cells of a macro base station and cells of one or more micro base stations jointly provide multiflow service to a UE. In other words, a macro base station transmits a data flow to a UE through a link, while one or more micro base stations transmit other data flows to the UE through other links.

According to the embodiment of the present invention, in a coverage area of a macro base station, a plurality of micro base stations may be deployed. In other words, the coverage area of the micro base station overlaps with the coverage area of the macro base station. These micro base stations may be controlled by an RNC that controls the macro base station. Optionally, the macro base station may be controlled by an RNC, while these micro base stations are controlled by other RNCs, and the RNC that controls the macro base station communicates with the RNCs that control the micro base stations through Iur ports.

Specifically, after a UE accesses a macro base station, a cell of the macro base station may serve as an HS-DSCH serving cell for the UE. An RNC may obtain identification information of the UE when the UE accesses the macro base station, and may send a check instruction that includes the identification information of the UE to one or more micro base stations, to instruct the micro base station to check whether the UE is in a coverage area of the micro base station. The micro base station may check uplink signal sent by the UE (for example, uplink dedicated channel signals sent by the UE during uplink synchronization). If the micro base station detects that identification information of the UE in the uplink signal is the same as the identification information of the UE in the check instruction, the micro base station detects that the UE is in the coverage area of the micro base station. The micro base station may further send a check response to the RNC to inform the RNC that the micro base station has successfully detected that the UE is in the coverage area of the micro base station. After the RNC receives the check response, multiflow configuration on the UE, the micro base station, and the macro base station may be triggered, and in this way, small cells of the micro base station also serve as the HS-DSCH serving cells of the UE, that is, cells of the micro base station and cells of the macro base station jointly provide multiflow service to the UE as multiflow serving cells.

In other words, after the micro base station successfully detects that the UE is in the coverage area of the micro base station, it informs the RNC of the check result, and then the RNC performs multiflow configuration according to the check result informed by the micro base station. If the micro base station fails to detect that the UE is in its coverage area, it does not send a check response to the RNC or inform the RNC that it fails to detect that the UE is in its coverage area, and as a result, the RNC does not perform the multiflow configuration on the micro base station that fails to detect the UE.

For example, the identification information includes at least one of the following information: an uplink scramble code of the UE, an uplink DPCCH channelization code, and an uplink DPCCH timeslot format, which is not limited in the embodiment of the present application, and the identification information may also be other information that is capable of identifying the UE.

In the embodiment of the present application, a first radio network controller may instruct a second base station to check whether a UE that has established a connection with a first base station is in a coverage area of the second base station, and perform multiflow configuration according to a check result, so that a cell of the first base station and a cell of the second base station jointly provide multiflow service to the UE. Since, according to the embodiment of the present application, when multiflow configuration is performed, less signaling exchange occurs, the system resource consumption is reduced and the call drop rate of a UE is also reduced, thereby increasing user experience.

In step 230, when the second base station detects that the UE is in the coverage area of the second base station, the second base station sends a first check response to the first radio network controller, where the first check response is used for indicating that the UE is in the coverage area of the second base station.

For example, the first check response may indicate that the second base station has successfully detected that the UE is in its coverage area, or the first check response may include a flag bit. For example, when the flag bit is 1, it indicates that the micro base station has successfully detected that the UE is in its coverage area; when the flag bit is 0, it indicates that the second base station failed to detect that the UE is in its coverage area, and vice versa.

Optionally, as another embodiment, the method further includes: receiving, by the second base station, the configuration instruction and multiflow configuration information, which are sent by the first radio network controller according to the first check response.

For example, when the first radio network controller determines, according to the first check response, that a second base station has successfully detected that the UE is in the coverage area of the second base station, the first radio network controller may send a configuration instruction and multiflow configuration information to the first base station, the second base station, and the UE, so that the first base station, the second base station, and the UE may perform multiflow configuration according to the multiflow configuration information. For example, after the second base station receives the multiflow configuration information, it performs the multiflow configuration according to the multiflow configuration information, so as to make cells of the second base station serve as multiflow serving cells of the UE. The configuration instruction and multiflow configuration information may be carried by a dedicated signaling message or a conventional signaling message (for example, a wireless link establishment message). The configuration instruction may be a flag bit or be implicitly indicated by placing the multiflow configuration information on a fixed cell of a signaling message.

Optionally, as another embodiment, the second base station receives the multiflow configuration information from the first radio network controller; the second base station receives the configuration instruction, which is sent by the first radio network controller according to the first check response.

For example, the first radio network controller may send multiflow configuration information to the first base station, the second base station, and the UE in advance. The first base station, second base station, and the UE do not perform multiflow configuration after they receive the multiflow configuration information, but perform the multiflow configuration after receiving the configuration instruction that is further sent by the first radio network controller. After the mechanism of sending multiflow configuration information in advance is introduced, a network side may send the multiflow configuration information to the UE in advance and when the multiflow configuration information is required to take effect, the network side needs merely send a simple instruction to the UE, thereby avoiding using large RRC signaling, increasing the success rate of handovers and shortening the handover time.

The method for configuring multiflow shown in FIG. 2 further includes: after the second base station receives the configuration instruction, instructing, by the second base station, through physical layer signaling, the UE to perform, according to the multiflow configuration information, multiflow configuration; and/or, forwarding, by the second base station, RRC layer reconfiguration signaling sent by the first RNC to the UE to instruct the UE to perform, according to the multiflow configuration information, multiflow configuration.

For example, according to the embodiment of the present application, two manners may be adopted to instruct a UE to perform multiflow configuration: 1) instruct, through physical layer signaling (for example, HS-DPCCH order), a UE to perform multiflow configuration; and 2) instruct, through RRC layer signaling sent by a first radio network controller (for example, RRC layer reconfiguration signaling), a UE to perform multiflow configuration. According to the embodiment of the present application, one of the foregoing two manners may be adopted, or the two manners may be both adopted to increase the rate of successfully receiving the configuration instruction for the UE. Informing, through physical layer signaling, the UE of switching to multiflow has great advantages in the delay for switching and may apparently reduce the call drop rate during the handover.

According to the embodiment of the present application, the configuration instruction further carries an activation time that is used to instruct the second base station to perform, according to the multiflow configuration information within the activation time, the multiflow configuration, where in step 240, after the second base station receives the configuration instruction, it performs the multiflow configuration according to the multiflow configuration information within the activation time.

Optionally, the physical layer signaling may carry the activation time, to instruct the UE to perform, according to the multiflow configuration information within the activation time, the multiflow configuration.

For example, in the circumstance that the configuration instruction and physical layer signaling carry the activation time, the UE and the network side may switch to a new multiflow serving cell simultaneously to perform multiflow.

Optionally, when a UE completes a multiflow serving cell handover, it may return a handover response to an RNC.

The method for configuring multiflow shown in FIG. 2 further includes: receiving, by the second base station, a stop checking instruction from the first radio network controller; and stopping, by the second base station, checking whether the UE is in the coverage area of the second base station according to the stop checking instruction.

For example, when receiving a check response from a third base station, the first radio network controller is informed that the third base station has already detected that the UE is in a coverage area of the third base station, and the first radio network controller may instruct the second base station to stop checking whether the UE is in the coverage area of the second base station, thereby reducing the system resource consumption of the second base station.

According to the embodiment of the present application, the second base station may determine whether the UE is in the coverage area of the second base station by checking whether the identification information of the UE in the uplink signal sent by the UE and the identification information of the UE in the first check instruction are consistent.

In the method according to the embodiment of the present application that a micro base station checks whether a UE is in a coverage area of the micro base station according to uplink signal, compared with the method that a UE checks small cells according to a conventional measurement process, the RRC signaling is apparently reduced, thereby saving air interface resources.

In step 220, the second base station may adopt the following manners to check whether the UE is in the coverage area of the second base station according to the first check instruction.

A second base station checks whether the UE is in the coverage area of the second base station according to an uplink synchronization rule.

For example, if in an uplink synchronization process of the UE, 10 uplink signal sent by the UE are detected consecutively within 100 ms, the network side determines that the UE is in its coverage area; otherwise, the network side determines that the UE is not in its coverage area.

In another embodiment of the present invention, the second base station checks whether the UE is in the coverage area of the second base station according to a rule carried in the first check instruction. For example, the carried rule is as follow: If at least Y uplink signal sent by the UE are detected consecutively within X (time period), the second base station determines that the UE is in the coverage area of the second base station; if less than Y uplink signal sent by the UE are detected consecutively within X (time period), the second base station determines that the UE is not in the coverage area of the second base station, where the unit of X may be ms, the value of Y is a positive integer, and X and Y are carried in the first check instruction. For example, the value of X is 0s to 5s and the value of Y is 0 to 100. Preferably, the value of X is 400 ms and the value of Y is 20.

In another embodiment of the present invention, the second base station checks whether the UE is in the coverage area of the second base station according to a preset rule. For example, the preset rule is as follow: If at least Y uplink signal sent by the UE are detected consecutively within X (time period), the second base station determines that the UE is in the coverage area of the second base station, and if less than Y uplink signal sent by the UE are detected consecutively within X (time period), the second base station determines that the UE is not in the coverage area of the second base station, where the unit of X may be ms and Y is a positive integer.

Optionally, as another embodiment, the method for configuring multiflow shown in FIG. 2 further include: performing, by the second base station, multiflow deconfiguration according to a deconfiguration instruction sent by the first radio network controller.

For example, the first radio network controller may determine, according to the amount of the scheduled data of the UE in a small cell within a time period, whether to perform multiflow deconfiguration.

Optionally, as another embodiment, the method for configuring multiflow shown in FIG. 2 further includes: sending, by the second base station, a deconfiguration request to the first RNC according to quality of an air interface channel; receiving, by the second base station, a deconfiguration instruction, which is sent by the first radio network controller according to the deconfiguration request; and performing, by the second base station, multiflow deconfiguration according to the deconfiguration instruction.

For example, when the second base station detects, according to feedback information of the UE, that quality of an air interface channel gets worse (for example, less than or equal to a preset threshold), the second base station may send a deconfiguration request to the first radio network controller to request the first radio network controller to trigger multiflow deconfiguration according to the deconfiguration request. After the first radio network controller receives the deconfiguration request, it may send a deconfiguration instruction to the first base station, the second base station, and the UE to instruct the first base station, the second base station, and the UE to perform multiflow deconfiguration. For example, the quality of an air interface channel may be reflected by a channel quality indicator (Channel Quality Indicator, CQI). The lower the CQI is, the worse the quality of the air interface channel is; the higher the CQI is, the better the quality of the air interface channel is.

According to the embodiment of the present application, the second base station is controlled by the first radio network controller.

For example, the macro base station and the micro base station are both controlled by a radio network controller.

Optionally, as another embodiment, the second base station is controlled by a second radio network controller, where the second base station communicates with the first radio network controller through a port between the second radio network controller and the first radio network controller.

For example, in a WCDMA system, a macro base station and a macro base station may be controlled by different radio network controllers and different radio network controllers communicate with each other through Iur ports. In this circumstance, according to the embodiment of the present invention, the check instruction, the check response and the stop checking instruction, the multiflow configuration instruction and the multiflow configuration information exchanged between the first radio network controller and the second base station (for example, a micro base station) is sent through the second radio network controller and Iur ports.

It should be understood that the check instruction, check response, stop checking instruction, configuration instruction and multiflow configuration information may be carried by dedicated signaling messages or conventional signaling messages.

According to the embodiment of the present application, in the circumstance of using multiflow in scenarios with small cells, signaling exchange can be effectively reduced and the reporting on a target small cell may be triggered rapidly, thereby making a UE better experience gains brought by multiflow.

FIG. 3 is a schematic flowchart of a method for configuring multiflow according to Embodiment 4 of the present application. The embodiment shown in FIG. 3 corresponds to the embodiment shown in FIG. 2, which is not described herein again.

Step 310: In the circumstance that a UE has established a connection with a first base station, a first radio network controller sends a first check instruction to a second base station, where the first base station is controlled by the first radio network controller and the first check instruction includes identification information of the UE, so that the second base station checks whether the UE is in a coverage area of the second base station.

Step 320: The first radio network controller performs multiflow configuration according to information sent by the UE that the UE is detected to be in the coverage area of the second base station, so that a cell of the first base station and a cell of the second base station jointly provide multiflow service to the UE as multiflow serving cells.

For example, take the first base station as a macro base station, the second base station as a micro base station, and the first radio network controller as an RNC, where when the first radio network controller is informed that a UE accesses the macro base station, the first radio network controller may send the check instruction to the micro base station in the coverage area of the macro base station, which is not limited in the embodiment of the present application. For example, when a UE moves away from a small cell, that is, moves away from a coverage area of a micro base station, the first radio network controller will delete the small cell from multiflow serving cells of the UE, and in this circumstance, the first radio network controller may send a check instruction to other small cells in the coverage area of the macro base station, or the first radio network controller may periodically send a check instruction to all micro base stations in the coverage area of the macro base station, to detect small cells of the micro base station and take them as new multiflow serving cells of the UE, thereby implementing small cell handovers. During the small cell handovers, the UE always remains a connection with the macro base station, thereby avoiding call drops caused by hard handovers.

In the embodiment of the present application, a radio network controller may instruct a second base station to check whether a UE that has established a connection with a first base station is in a coverage area of the second base station, and perform multiflow configuration according to a check result, so that a cell of the first base station and a cell of the second base station jointly provide multiflow service to the UE. Since, according to the embodiment of the present application, when multiflow configuration is performed, less signaling exchange occurs, the system resource consumption is reduced.

Optionally, as another embodiment, the method for configuring multiflow shown in FIG. 3 further includes: receiving, by the first radio network controller, a first check response, which is sent by the second base station according to the check result, where the first check response is used to indicate that the UE is in the coverage area of the second base station.

Optionally, as another embodiment, the method for configuring multiflow shown in FIG. 3 further includes: sending, by the first radio network controller, a configuration instruction and multiflow configuration information to the first base station, the second base station, and the UE according to the first check response, so that the first base station, the second base station, and the UE perform multiflow configuration according to the configuration instruction and the multiflow configuration information.

Optionally, as another embodiment, the method for configuring multiflow shown in FIG. 3 further includes: sending, by the first radio network controller, multiflow configuration information to the second base station and the UE; and sending, by the first radio network controller after receiving the first check response sent by the second base station, a configuration instruction to the first base station and the second base station, so that the first base station and the second base station perform multiflow configuration according to the configuration instruction and the multiflow configuration information.

Optionally, as another embodiment, the method for configuring multiflow shown in FIG. 3 further includes: sending, by the first radio network controller, reconfiguration signaling to the UE to instruct the UE to perform, according to the multiflow configuration information, the multiflow configuration.

According to the embodiment of the present application, the configuration instruction further carries an activation time that is used to instruct the first base station and the second base station to perform, according to the multiflow configuration information within the activation time, the multiflow configuration.

Optionally, as another embodiment, the method for configuring multiflow shown in FIG. 3 further includes: receiving, by the first radio network controller when the UE accesses the first base station, measurement information of the second base station reported by the UE, where in step 310, the first radio network controller sends a first check instruction to the second base station according to the measurement information.

Optionally, as another embodiment, the method for configuring multiflow shown in FIG. 3 further includes: sending, by the first radio network controller, a second check instruction to a third base station, where the second check instruction includes the identification information of the UE, so that the third base station checks whether the UE is in a coverage area of the third base station; and in the circumstance that the first radio network controller receives the first check response from the second base station, sending, by the first radio network controller, a stop checking instruction to the third base station, so that the third base station stops checking whether the UE is in the coverage area of the third base station.

Optionally, as another embodiment, the method for configuring multiflow shown in FIG. 3 further includes: receiving, by the first radio network controller, a second check response from the third base station, where the second check response is used to indicate whether the UE is in the coverage area of the third base station; and selecting, by the first radio network controller, according to a preset rule, from a group that consists of the second base station and the third base station, the second base station for the multiflow, where in step 310, the first radio network controller may send a first check instruction to the selected second base station.

For example, in the circumstance that the second base station and the third base station both return check responses, the RNC may select the base station according to the order of receiving the check responses. For example, if the RNC receives the check response from the second base station before it receives the check response from the third base station, the RNC selects the second base station as a multiflow serving cell.

Optionally, the RNC may perform the selection according to cell loads of micro base stations, and/or the numbers of UEs that access to cells, and/or the number of available resources in cells. For example, the RNC selects a cell with a lighter load as a multiflow serving cell.

According to the embodiment of the present application, the first base station is a macro base station and the second base station is a micro base station.

Optionally, as another embodiment, the method for configuring multiflow shown in FIG. 3 further includes: receiving, by the first radio network controller, a deconfiguration request from the second base station and sending a deconfiguration instruction to the second base station and the UE according to the deconfiguration request, so that the second base station and the UE perform multiflow deconfiguration.

For example, whether to perform the multiflow deconfiguration may be determined by the second base station. The second base station sends a deconfiguration request to the first radio network controller according to quality of an air interface channel to request the first radio network controller to trigger multiflow deconfiguration.

Optionally, as another embodiment, the method for configuring multiflow shown in FIG. 3 further includes: sending, by the first radio network controller, a deconfiguration instruction to the second base station and the UE according to preset data scheduling condition, so that the second base station and the UE perform multiflow deconfiguration.

For example, whether to perform the multiflow deconfiguration may be determined by the first radio network controller. The first radio network controller may determine whether to perform multiflow deconfiguration according to the amount of the scheduled data of the UE in a small cell of the second base station within a time period.

According to the embodiment of the present application, the second base station is controlled by the first radio network controller.

Optionally, as another embodiment, the second base station is controlled by a second radio network controller, where the second base station communicates with the first radio network controller through a port between the second radio network controller and the first radio network controller.

According to the embodiment of the present application, the identification information includes an uplink scramble code corresponding to the UE and/or an uplink DPCCH channelization code and/or an uplink DPCCH timeslot format.

According to the embodiment of the present application, in the circumstance of using multiflow in scenarios with small cells, signaling exchange can be effectively reduced and the reporting on a target small cell may be triggered rapidly, thereby making a UE better experience gains brought by multiflow.

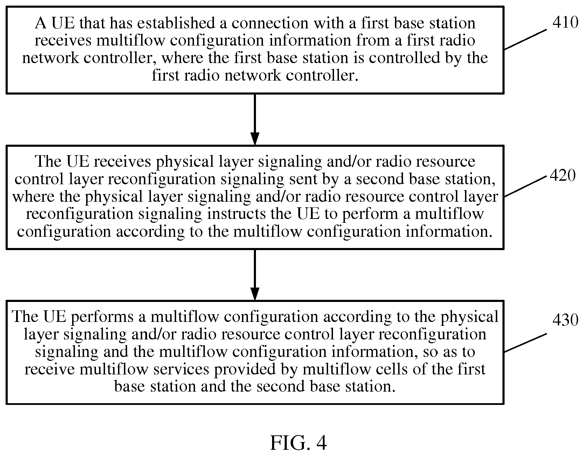

FIG. 4 is a schematic flowchart of a method for configuring multiflow according to Embodiment 5 of the present application. The embodiment shown in FIG. 4 corresponds to the embodiment shown in FIG. 2, which is not described herein again.

Step 410: A UE that has established a connection with a first base station receives multiflow configuration information from a first radio network controller, where the first base station is controlled by the first radio network controller.

Step 420: The UE receives physical layer signaling and/or radio resource control layer reconfiguration signaling sent by a second base station, where the physical layer signaling and/or radio resource control layer reconfiguration signaling instructs the UE to perform, according to the multiflow configuration information, multiflow configuration.

Step 430: The UE performs multiflow configuration according to the physical layer signaling and/or radio resource control layer reconfiguration signaling and the multiflow configuration information, so as to receive multiflow service provided by a cell of the first base station and a cell of the second base station to the UE as multiflow serving cells.

In the embodiment of the present application, a first radio network controller may instruct a second base station to check whether a UE that has established a connection with a first base station is in the coverage area of the second base station, and perform multiflow configuration according to a check result, so that a cell of the first base station and a cell of the second base station jointly provide multiflow service to the UE. Since, according to the embodiment of the present application, when multiflow configuration is performed, less signaling exchange occurs, the system resource consumption is reduced.

Optionally, as another embodiment, the method for configuring multiflow shown in FIG. 4 further includes: receiving, by the UE, reconfiguration signaling sent by the first radio network controller, where the reconfiguration signaling is used to instruct the UE to perform, according to the multiflow configuration information, the multiflow configuration.

Optionally, as another embodiment, the method for configuring multiflow shown in FIG. 4 further includes: receiving, by the UE, a deconfiguration instruction sent by the first radio network controller; and performing by the UE, the multiflow deconfiguration according to the deconfiguration instruction.

According to the embodiment of the present application, in the circumstance of using multiflow in scenarios with small cells, signaling exchange can be effectively reduced and the reporting on a target small cell may be triggered rapidly, thereby making a UE better experience gains brought by multiflow.

The following describes the embodiments of the present application in more details in combination with specific examples.

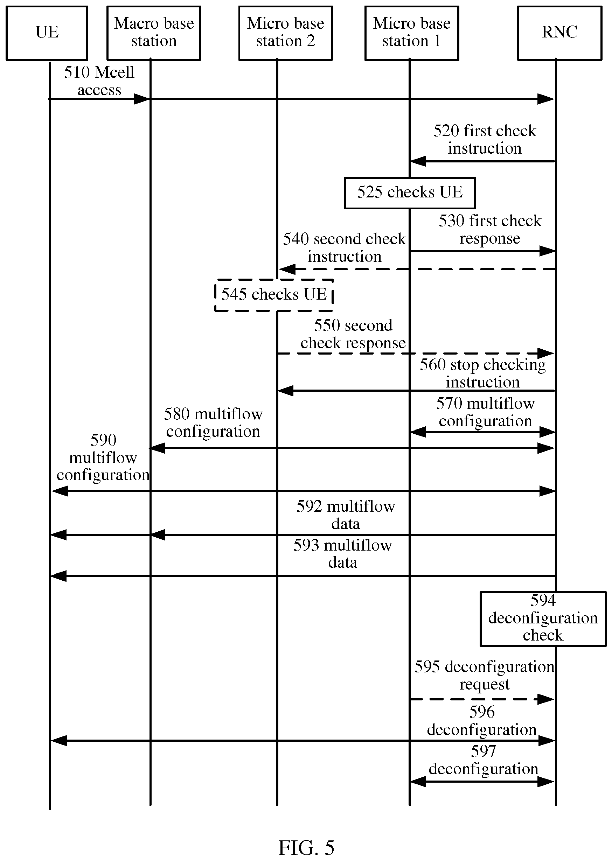

FIG. 5 is a schematic flowchart of a multiflow configuration process according to Embodiment 6 of the present application. The embodiment shown in FIG. 5 is an example of the embodiments shown in FIG. 2, FIG. 3 and FIG. 4. The embodiment shown in FIG. 5 describes processes of multiflow configuration and deconfiguration in the circumstance that a macro base station and a micro base station are controlled by the same RNC.

Step 510: A UE accesses a macro base station.

For example, a UE establishes an RRC connection with a macro base station through RRC signaling, that is, accesses a macro base station, and may receive data through the macro base station.

Step 520: An RNC sends a first check instruction to micro base station 1.

For example, after a UE accesses a macro base station, an RNC may send a first check instruction to micro base station 1, where the micro base station 1 may be a micro base station in the coverage area of the macro base station. A first check instruction is information that uniquely identifies the UE. For example, the first check instruction may include an uplink scramble code corresponding to the UE, and/or an uplink DPCCH channelization code, and/or an uplink DPCCH timeslot format.

Optionally, when the UE moves away from a small cell, that is, moves away from a coverage area of a micro base station, the RNC may send a check instruction to micro base stations in the coverage area of the macro base station, or the first radio network controller may periodically send a check instruction to the micro base stations in the coverage area of the macro base station, to detect small cells of the micro base station and take them as new multiflow serving cells of the UE.

Step 525: Micro base station 1 checks whether the UE is in its coverage area.

For example, after micro base station 1 receives the first check instruction sent by the RNC, micro base station 1 may check the UE according to a rule defined in the process of conventional uplink synchronization (the rule defined in chapter 4.3.2 of 3GPP TS 25.214). Micro base station 1 may determine, through uplink synchronization check, whether the identification information of the UE in sent uplink signal (for example, DPCCH) is consistent with the identification information of the UE in the first check instruction. If they are consistent, the micro base station successfully detects that the UE is in its coverage area.

Optionally, the RNC may carry a check rule in the check instruction, and micro base station 1 may determine whether the UE is in its coverage area according to the check rule.

According to the embodiment of the present application, the foregoing methods for checking a UE are not exclusive. For example, a new check rule may be defined and the micro base station may check the UE according to the new defined rule.

Step 530: Micro base station 1 returns a first check response to the RNC.

For example, when micro base station 1 detects that the UE is in its coverage area, the micro base station 1 may carry a flag bit 1 in a first check response; when micro base station 1 fails to detect that the UE is in its coverage area, micro base station 1 may carry a flag bit 0 in a first check response. Optionally, micro base station 1 may send the first check response to the RNC when it detects that the UE is in its coverage area; when the micro base station 1 fails to detect that the UE is in its coverage area, it does not send a first check response to the RNC.

Step 540: The RNC sends a second check instruction to micro base station 2.

After the UE accesses the macro base station, the RNC may send a second check instruction to micro base station 2, where the micro base station 2 may be a micro base station in the coverage area of the macro base station. The second check instruction is the information that uniquely identifies the UE. For example, the second check instruction may include an uplink scramble code corresponding to the UE and/or an uplink DPCCH timeslot format.

Step 545: Micro base station 2 checks whether the UE is in its coverage area.

For example, after micro base station 2 receives the second check instruction sent by the RNC, micro base station 1 may check the UE according to the rule defined in the process of conventional uplink synchronization (the rule defined in chapter 4.3.2 of 3GPP TS 25.214). Micro base station 2 may determine, through uplink synchronization check, whether the identification information of the UE in uplink sent signals (for example, DPCCH) is consistent with the identification information of the UE in the second check instruction. If they are consistent, micro base station 2 successfully detects that the UE is in its coverage area.

Optionally, the RNC may carry a check rule in the check instruction, and micro base station 2 may determine whether the UE is in its coverage area according to the check rule.

According to the embodiment of the present application, the foregoing methods for checking a UE are not exclusive. For example, a new check rule may be defined and the micro base station may check the UE according to the new defined rule.

Step 550: Micro base station 2 returns a second check response to the RNC.

For example, when micro base station 2 detects that the UE is in its coverage area, the micro base station 2 may carry a flag bit 1 in a second check response; when micro base station 2 fails to detect that a UE is in its coverage area, the micro base station 1 may carry a flag bit 0 in a second check response. Optionally, micro base station 2 may send a second check response to the RNC when it detects that the UE is in its coverage area; when the micro base station 2 fails to detect that the UE is in its coverage area, it does not send a second check response to the RNC.

Step 560: The RNC sends a stop checking instruction to micro base station 2.

For example, after the RNC receives the first check response from micro base station 1, it may determine that the UE is in the coverage area of micro base station 1 according to the first check response, and instruct other micro base stations (for example, micro base station 2) to stop checking the UE, so as to avoid unnecessary check performed by micro base station 2, thereby reducing the system resource consumption of micro base station 2.

Step 570: The RNC sends a configuration instruction and multiflow configuration information to micro base station 1, so that micro base station 1 performs multiflow configuration.

After the RNC determines that the UE is in the coverage area of micro base station 1, it may perform multiflow configuration on micro base station 1. For example, the RNC sends a configuration instruction and multiflow configuration information to micro base station 1, and completes multiflow configuration after micro base station 1 returns a multiflow configuration response.

Optionally, for example, if a plurality of micro base stations (for example, micro base station 1 and micro base station 2 in the embodiment shown in FIG. 5) reports check responses to the RNC, the RNC needs to select a proper micro base station as the new multiflow serving cell of the UE. The following two selection manners may be adopted:
1) The RNC may perform the selection according to the order of receiving the check responses. For example, if the RNC receives the check response from micro base station 1 before it receives the check response from micro base station 2, the RNC selects the micro base station 1 as a multiflow serving cell.
2) The RNC may perform the selection according to cell loads of micro base stations, the number of UEs that access to cells, and the number of available resources in the cells. For example, the RNC selects a cell with a lighter load as a multiflow serving cell.

Step 580: The RNC sends multiflow configuration information to the macro base station, so that the macro base station performs multiflow configuration.

The RNC further needs to inform the macro base station of completing the multiflow configuration, where because when the number of multiflow serving cells changes, the format of uplink channels in systems that adopt the HSDPA technology may change. The macro base station may perform corresponding changes on the transmission configuration according to notifications of the RNC.

Step 590: The RNC sends multiflow configuration information to the UE, so that the UE performs multiflow configuration.

For example, the RNC may send multiflow configuration information to the UE through micro base station 1, and the UE may perform multiflow configuration according to the received multiflow configuration information. The multiflow configuration information may include at least one the following information: an HS-SCCH channelization code of an auxiliary serving cell, an HS-PDSCH channelization code of an auxiliary serving cell, an uplink HS-DPCCH channelization code of the UE, transmit power offsets of the acknowledgement and non-acknowledgement in the uplink HS-DPCCH channelization code of the UE, a transmit power offset of a channel quality indication in an uplink HS-DPCCH channel of the UE, information of a mapping from the HS-DSCH transmit channel of the UE to a physical channel, and information of a mapping from a service logical channel of the UE to an HS-DSCH transmit channel.

Step 592: The UE receives data through the macro base station.

After the UE and the macro base station perform the multiflow configuration, the UE may receive data through the macro base station.

Step 593: The UE receives data through micro base station 1.

After the UE and micro base station 1 perform the multiflow configuration, the UE may receive data through micro base station 1, thereby implementing multiflow.

Further, the embodiment shown in FIG. 5 may further include a process of performing multiflow deconfiguration.

Step 594: The RNC determines to trigger multiflow deconfiguration.

The RNC may determine, according to the amount of scheduled data of the UE on micro base station 1, whether to perform multiflow deconfiguration. For example, within a preset time, if the RNC detects that the amount of downlink data that micro base station 1 requests for is lower than a certain threshold, or the UE does not have much downlink data scheduling for a long time (for example, a time period that is longer than the preset time), then the RNC may trigger a multiflow deconfiguration.

Step 595: Micro base station 1 sends a deconfiguration request to the RNC to request the RNC to trigger multiflow deconfiguration.

Micro base station 1 requests, according to quality of an air interface channel, the RNC to perform multiflow deconfiguration. For example, if the channel quality in the feedback information of the UE and the receiving feedback of downlink packets remain poor for a long time (for example, a time period that is longer than the preset time), micro base station 1may send a deconfiguration request to the RNC to request the RNC to trigger multiflow deconfiguration on the UE.

It should be understood that, according to the embodiment of the present application, the manner in step 594 or step 595 may be selected for triggering multiflow deconfiguration.

Step 596: The RNC sends a deconfiguration instruction to the UE, so that the UE performs multiflow deconfiguration according to the deconfiguration instruction.

Step 597: The RNC sends a deconfiguration instruction to micro base station 1, so that micro base station 1 performs multiflow deconfiguration.

It should be understood that step 540, step 545, and step 550 are optional. If in a process of a UE accessing a macro base station, measurement information of a small cell on a certain frequency point (the frequency point of the small cell) is carried in a measurement report, an RNC may send a check instruction to a micro base station of the small cell after the RNC receives the measurement report, thereby optimizing resources of the micro base station. For example, in the embodiment shown in FIG. 5, the first check instruction may be sent merely to micro base station 1.

It should be further understood that, according to the embodiment of the present application, the order of sending the check instruction to micro base station 1 and micro base station 2 is not limited, where the check instruction may be sent to micro base station 1 and micro base station 2 at the same time or the check instruction may be sent to one of the micro base stations first and in the circumstance that the micro base station does not detect the UE, the check instruction is sent to the other micro base station.

It should be further understood that, according to the embodiment of the present application, the order of sending multiflow configuration information to the UE, the micro base station and the macro base station is not limited. For example, step 570, step 580, and step 590 may be executed at the same time or one after another in any order.

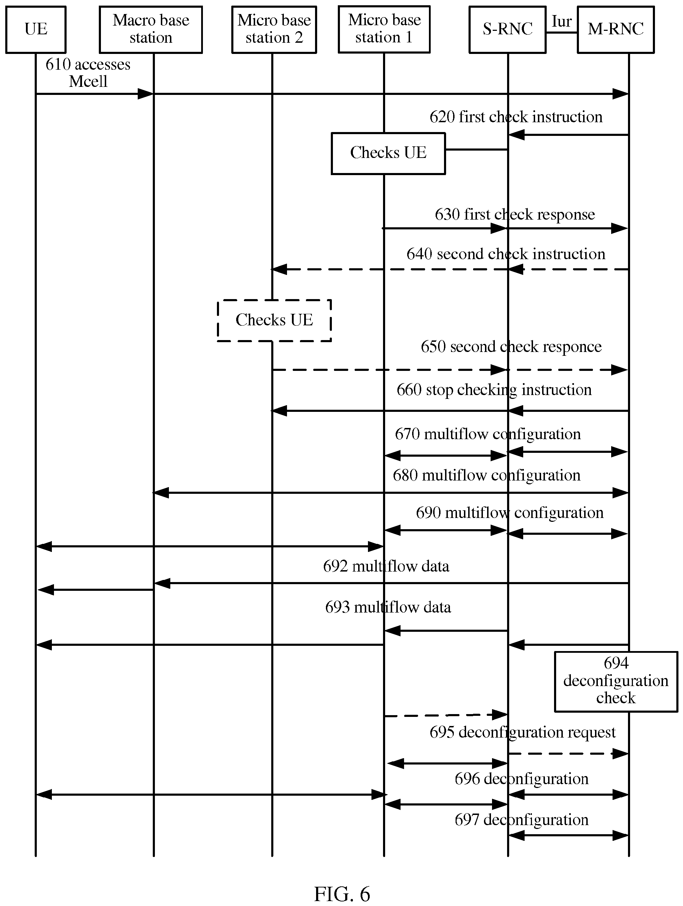

FIG. 6 is a schematic flowchart of a multiflow configuration process according to Embodiment 7 of the present application. The embodiment shown in FIG. 6 is an example of the methods shown in FIG. 2, FIG. 3 and FIG. 4. The embodiment shown in FIG. 6 describes processes of multiflow configuration and deconfiguration in the circumstance that a micro base station and a macro base station are controlled by different RNCs.

Step 610 to step 697 shown in FIG. 6 are similar to step 510 to step 597 shown in FIG. 5, and the difference between FIG. 6 and FIG. 5 lies in whether a micro base station and a macro base station are controlled by the same RNC. For example, in the embodiment shown in FIG. 6, micro base station 1 and micro base station 2 are controlled by S-RNC, while the macro base station is controlled by M-RNC. S-RNC and M-RNC perform signaling and data exchange with each other through conventional Iur ports, that is, S-RNC establishes a connection with M-RNC by using standard Iur ports, to implement communication between them.

Differed from the process of multiflow configuration according to the embodiment shown in FIG. 5, the embodiment shown in FIG. 6 adds corresponding signaling exchange between S-RNC and M-RNC, and the exchanged information is similar to the exchanged information in the process shown in FIG. 5, which is not described herein again.

Step 610: A UE accesses a macro base station.

Step 620: M-RNC sends a first check instruction to micro base station 1 through S-RNC.

Step 625: Micro base station 1 checks whether the UE is in its coverage area.

Step 630: Micro base station 1 returns a first check response to M-RNC through S-RNC.

Step 640: M-RNC sends a second check instruction to micro base station 2 through S-RNC.

Step 645: Micro base station 2 checks whether the UE is in its coverage area.

Step 650: Micro base station 2 returns a second check response to M-RNC through S-RNC.

Step 660: M-RNC sends a stop checking instruction to micro base station 2 through S-RNC.

Step 670: M-RNC sends multiflow configuration information to micro base station 1 through S-RNC, so that micro base station 1 performs multiflow configuration. Micro base station 1 may return a multiflow configuration response to M-RNC through S-RNC.

Step 680: M-RNC sends a configuration instruction and multiflow configuration information to the macro base station, so that the macro base station performs multiflow configuration. The macro base station may return a multiflow configuration response to M-RNC.

Step 690: M-RNC sends multiflow configuration information to the UE through S-RNC and micro base station 1, so that the UE performs multiflow configuration. The UE may return a multiflow configuration response to M-RNC.

Step 692: The UE receives data through the macro base station.

Step 693: The UE receives data through micro base station 1.

Further, the embodiment shown in FIG. 6 may further include a process of performing multiflow deconfiguration.

Step 694: M-RNC determines to trigger multiflow deconfiguration.

Step 695: Micro base station 1 sends a deconfiguration request to M-RNC through S-RNC to request M-RNC to trigger multiflow deconfiguration.

It should be understood that, according to the embodiment of the present application, one of the methods in step 694 and step 695 may be selected for triggering multiflow deconfiguration.

Step 696: M-RNC sends a deconfiguration instruction to the UE through S-RNC and micro base station 1, so that the UE performs multiflow deconfiguration according to the deconfiguration instruction.

Step 697: The RNC sends a deconfiguration instruction to micro base station 1 through S-RNC, so that micro base station 1 performs multiflow deconfiguration.

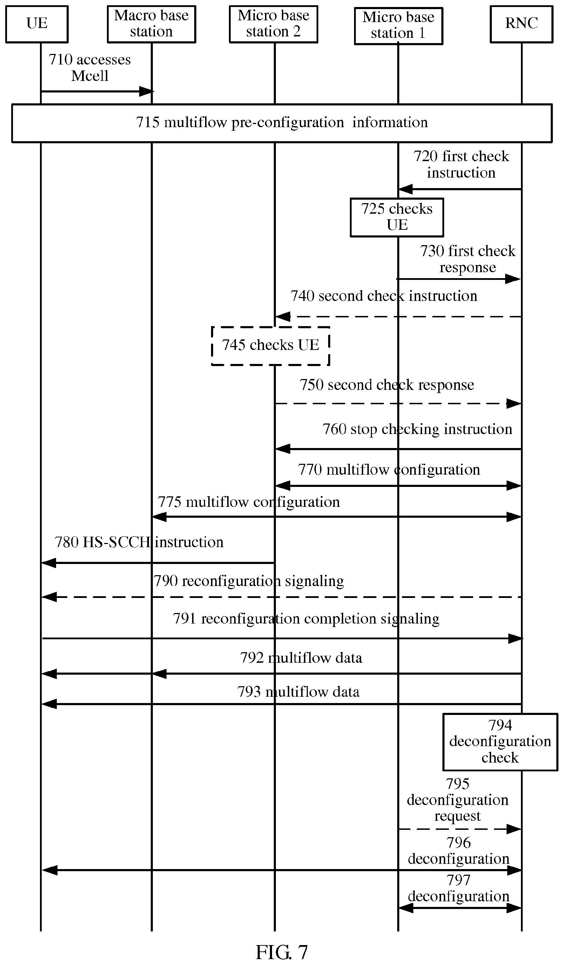

FIG. 7 is a schematic flowchart of a multiflow configuration process according to Embodiment 8 of the present application. The embodiment shown in FIG. 7 is an example of the embodiments shown in FIG. 2, FIG. 3 and FIG. 4. The embodiment shown in FIG. 7 describes processes of multiflow configuration and deconfiguration in the circumstance that a micro base station and a macro base station are controlled by the same RNC. Step 710, step 720, step 725, step 730, step 740, step 745, step 750, step 760, step 792, step 793, step 794, step 795, step 796, and step 797 shown in FIG. 7 are similar to step 510, step 520, step 525, step 530, step 540, step 545, step 550, step 560, step 592, step 593, step 594, step 595, step 596, and step 597 shown in FIG. 5, so herein detailed descriptions are omitted appropriately.

Step 710: A UE accesses a macro base station.

Step 715: An RNC sends multiflow configuration information to the macro base station, micro base station 1, micro base station 2, and the UE.

After the UE accesses the macro base station, the RNC may send multiflow configuration information (hereinafter referred to as multiflow pre-configuration information) to a micro base station (for example, micro base station 1 and micro base station 2), the UE, and the macro base station, where the multiflow pre-configuration information may be taken as multiflow configuration information in the circumstance that a small cell of the micro base station is configured as a multiflow serving cell.

Step 720: The RNC sends a first check instruction to micro base station 1.

Step 725: Micro base station 1 checks whether the UE is in its coverage area.

Step 730: Micro base station 1 returns a first check response to the RNC.

Step 740: The RNC sends a second check instruction to micro base station 2.

Step 745: Micro base station 2 checks whether the UE is in its coverage area.

Step 750: Micro base station 2 returns a second check response to the RNC.

Step 760: The RNC sends a stop checking instruction to micro base station 2.

Step 770: The RNC sends a configuration instruction to micro base station 1, so that micro base station 1 performs multiflow configuration.

For example, after the RNC determines that the UE is in the coverage area of micro base station 1, it may instruct micro base station 1 to perform multiflow configuration. For example, the RNC may send a configuration instruction to micro base station 1, and complete multiflow configuration after micro base station 1 returns a multiflow configuration response. For example, a configuration instruction may include a flag bit, where the value 1 of the flag bit instructs the performing of multiflow configuration. After micro base station 1 receives the configuration instruction, micro base station 1 may perform multiflow configuration according to the received multiflow configuration information in step 715.

Optionally, in the circumstance that the RNC receives the first check response and the second check response, the RNC may, according to the order of receiving the first check response and the second check response, select a small cell of micro base station 1 or a small cell of micro base station 2 as a multiflow serving cell to perform multiflow configuration. The selection manner is similar to that shown in FIG. 550, which is not described herein again.

Optionally, an activation time may further be carried in the configuration instruction to instruct micro base station 1 to perform, within the activation time, multiflow configuration, where a small cell of micro base station 1 provides multiflow service to the UE as a new multiflow serving cell.

Step 775: The RNC sends configuration instruction to the macro base station, so that the macro base station performs multiflow configuration.

The RNC further needs to inform the macro base station of completing multiflow configuration, where because when the number of multiflow serving cells changes, the format of uplink channels in systems that adopt the HSDPA technology may change. The macro base station may perform corresponding changes on the transmission configuration according to notifications of the RNC. For example, after the macro base station receives the configuration instruction, the macro base station may perform multiflow configuration according to the received multiflow configuration information in step 715.

Optionally, an activation time may further be carried in the configuration instruction to instruct the macro base station to perform, within the activation time, multiflow configuration, where a macro cell of the macro base station provides multiflow service to the UE as a new multiflow serving cell. The UE, the macro base station, and micro base station 1 may switch to the multiflow simultaneously within the activation time, where new multiflow serving cells (that is, a macro cell of the macro base station and a small cell of micro base station 1) provide multiflow service to the UE, and then the UE may send a handover response message to complete a handover.

Step 780: Micro base station 1 sends an HS-SCCH instruction to the UE, so that the UE performs multiflow configuration.

For example, after micro base station 1 receives the configuration instruction sent by the RNC, micro base station 1 may instruct, through physical layer signaling (for example, HS-SCCH order), the UE to switch to multiflow.

Compared with the embodiment shown in FIG. 5, in the embodiment shown in FIG. 7, micro base station 1 informs, through physical layer signaling, the UE to switch to multiflow, which has great advantages in the delay for switching and may apparently reduce the call drop rate during the handover.

Optionally, an activation time may further be carried in the configuration instruction to instruct the UE to perform, within the activation time, multiflow configuration.

Step 790: The RNC sends reconfiguration signaling to the UE.

For example, the RNC may further send RRC reconfiguration signaling to the UE through micro base station 1, that is, the RNC may instruct, through RRC reconfiguration signaling, the UE to switch to multiflow to increase the success rate of handovers.

Step 791: The UE returns reconfiguration completion signaling to the RNC.

For example, the UE returns RRC reconfiguration completion signaling to the RNC through micro base station 1 to respond to RRC reconfiguration signaling. It should be understood that, step 790 and step 791 are optional.

Step 792: The UE receives data through the macro base station.

Step 793: The UE receives data through micro base station 1.

Further, the embodiment shown in FIG. 7 may further include a process of performing multiflow deconfiguration.

Step 794: The RNC determines to trigger multiflow deconfiguration.

Step 795: Micro base station 1 sends a deconfiguration request to the RNC to request the RNC to trigger multiflow deconfiguration.

Step 796: The RNC sends a deconfiguration instruction to the UE, so that the UE performs multiflow deconfiguration according to the deconfiguration instruction.

Step 797: The RNC sends a deconfiguration instruction to micro base station 1, so that micro base station 1 performs multiflow deconfiguration.

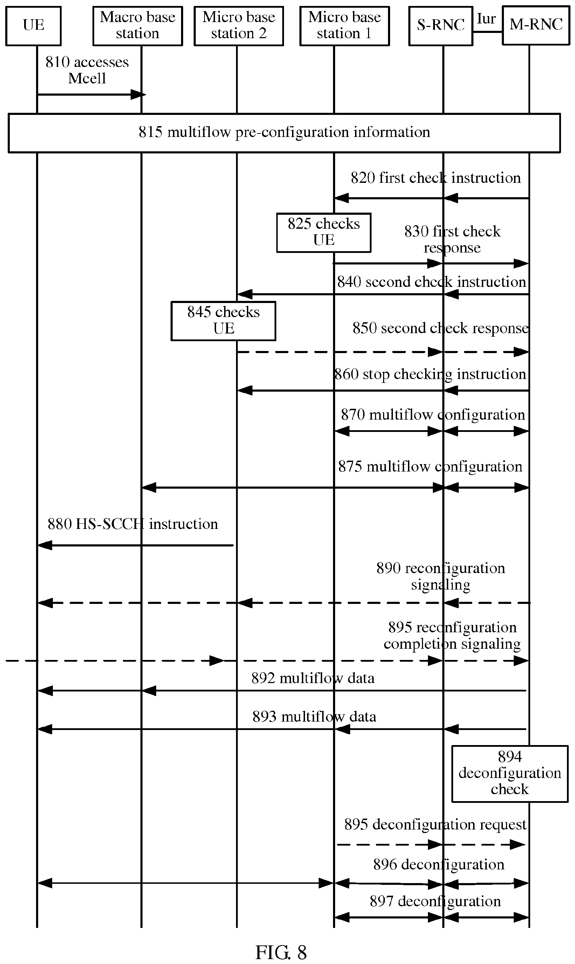

FIG. 8 is a schematic flowchart of a multiflow configuration process according to Embodiment 9 of the present application. The embodiment shown in FIG. 8 is an example of the embodiments shown in FIG. 2, FIG. 3 and FIG. 4. The embodiment shown in FIG. 8 describes processes of multiflow configuration and deconfiguration in the circumstance that a micro base station and a macro base station are controlled by different RNCs.

Step 810 to step 897 shown in FIG. 8 are similar to step 710 to step 797 shown in FIG. 7, and the difference between FIG. 8 and FIG. 7 lies in whether a micro base station and a macro base station are controlled by the same RNC. For example, in the embodiment of FIG. 8, micro base station 1 and micro base station 2 are controlled by S-RNC, while the macro base station is controlled by M-RNC. S-RNC and M-RNC perform signaling and data exchange with each other through conventional Iur ports, that is, S-RNC establishes a connection with M-RNC by using standard Iur ports, to implement communication between them.

Differed from the process of multiflow configuration according to the embodiment shown in FIG. 7, the embodiment shown in FIG. 8 adds corresponding signaling exchange between S-RNC and M-RNC, and the exchanged information is similar to the exchanged information in the process shown in FIG. 7, which is not described herein again.

Step 810: A UE accesses a macro base station.

Step 815: M-RNC sends multiflow pre-configuration information to the macro base station, micro base station 1, micro base station 2, and the UE.

For example, M-RNC may send multiflow pre-configuration information to the micro base station through S-RNC, may send multiflow pre-configuration information to the macro base station, and may send multiflow pre-configuration information to the UE through the macro base station or any micro base station, so that the macro base station, the micro base station, and the UE may perform multiflow configuration according to the multiflow pre-configuration information when necessary.

Step 820: M-RNC sends a first check instruction to micro base station 1 through S-RNC.

Step 825: Micro base station 1 checks whether the UE is in its coverage area.

Step 830: Micro base station 1 returns a first check response to M-RNC through S-RNC.

Step 840: M-RNC sends a second check instruction to micro base station 2 through S-RNC.

Step 845: Micro base station 2 checks whether the UE is in its coverage area.

Step 850: Micro base station 2 returns a second check response to M-RNC through S-RNC.

Step 860: M-RNC sends a stop checking instruction to micro base station 2 through S-RNC.

Step 870: The RNC sends a configuration instruction to micro base station 1, so that micro base station 1 performs multiflow configuration.

Step 875: M-RNC sends configuration information to the macro base station, so that the macro base station performs multiflow configuration.

Step 880: Micro base station 1 sends an HS-SCCH instruction to the UE, so that the UE performs multiflow configuration.

Step 890: M-RNC sends multiflow configuration information to the UE through micro base station 1.

Step 891: The UE returns reconfiguration completion signaling to M-RNC through S-RNC.

Step 892: The UE receives data through the macro base station.

Step 893: The UE receives data through micro base station 1.

Further, the embodiment shown in FIG. 5 may further include a process of performing multiflow deconfiguration.

Step 894: M-RNC determines to trigger multiflow deconfiguration.

Step 895: Micro base station 1 sends a deconfiguration request to M-RNC through S-RNC to request M-RNC to trigger multiflow deconfiguration.

Step 896: M-RNC sends a deconfiguration instruction to the UE through S-RNC and micro base station 1, so that the UE performs multiflow deconfiguration according to the deconfiguration instruction.

Step 897: M-RNC sends a deconfiguration instruction to micro base station 1 through S-RNC, so that micro base station 1 performs multiflow deconfiguration.

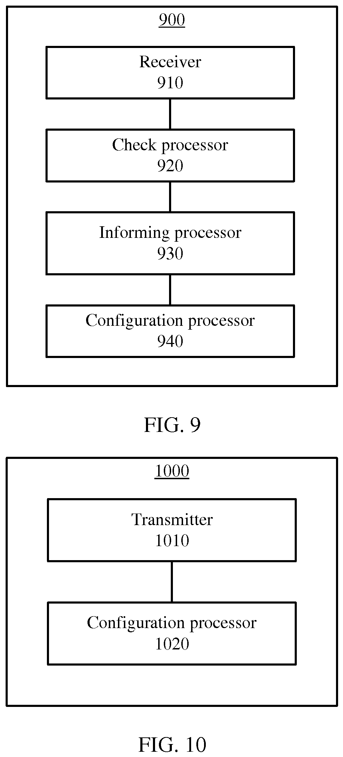

The foregoing describes method for configuring multiflows according to the embodiments of the present application, while the following describes a base station, a UE and a radio network controller according to the embodiments of the present application with reference to FIG. 9 to FIG. 12.

FIG. 9 is a schematic structural diagram of a base station according to Embodiment 10 of the present application. A base station 900 includes: a receiver 910, a check processor 920, an informing processor 930, and a configuration processor 940. The base station 900 shown in FIG. 9 corresponds to the method shown in FIG. 2, which is not described herein again.

The receiver 910 is configured to receive a first check instruction sent by a first radio network controller, where the first check instruction includes identification information of a UE that has established a connection with another base station and the another base station is controlled by the first radio network controller. The check processor 920 is configured to check whether the UE is in the coverage area of the base station 900 according to the first check instruction. The informing processor 930 is configured to inform the first radio network controller of information that the UE is detected to be in the coverage area of the second base station, so that the first radio network controller performs multiflow configuration according to the check result. The configuration processor 940 is configured to perform multiflow configuration according to a configuration instruction and multiflow configuration information that are sent by the first radio network controller, so that cells of another base station and cells of the base station 900 jointly provide multiflow service to the UE as multiflow serving cells.

In the embodiment of the present application, a radio network controller may instruct a second base station to check whether a UE that has established a connection with a first base station is in a coverage area of the second base station, and perform multiflow configuration according to a check result, so that a cell of the first base station and a cell of the second base station jointly provide multiflow service to the UE. Since, according to the embodiment of the present application, when multiflow configuration is performed, less signaling exchange occurs, the system resource consumption is reduced.

According to the embodiment of the present application, the informing processor 930 is configured to: in the circumstance that the UE is detected to be in the coverage area of the base station 900, send a first check response to the first radio network controller, where the first check response is used for indicating that the UE is in the coverage area of the base station 900.

Optionally, as another embodiment, the receiver 910 is further configured to receive a configuration instruction and multiflow configuration information, which are sent by the first radio network controller according to a first check response.

According to the embodiment of the present application, the receiver 910 is further configured to receive multiflow configuration information sent by the first radio network controller, and to receive a configuration instruction, which is sent by a first radio network controller according to the first check response.

Optionally, as another embodiment, the configuration processor 930 is further configured to: after the configuration instruction is received, instruct, through physical layer signaling the UE to perform, according to the multiflow configuration information, multiflow configuration.

Optionally, as another embodiment, the configuration processor 930 forwards radio resource control layer reconfiguration signaling sent by the first radio network controller, to instruct the UE to perform, according to the multiflow configuration information, multiflow configuration.

According to the embodiment of the present application, the configuration instruction and the physical layer signaling further carry an activation time that is used to instruct the base station 900 and the UE to perform, according to the multiflow configuration information within the activation time, multiflow configuration, where the configuration processor is configured to: after the configuration instruction received, perform the multiflow configuration according to the multiflow configuration information within the activation time.

Optionally, as another embodiment, the receiver 910 is further configured to receive a stop checking instruction sent by the first radio network controller; the check processor 920 stops checking whether the UE is in the coverage area of the second base station according to the stop checking instruction.

According to the embodiment of the present application, the check processor 920 may determine whether the UE is in the coverage area of the base station 900 by checking whether the identification information of the UE in uplink signal sent by the UE and the identification information of the UE in the first check instruction are consistent.

According to the embodiment of the present application, the check processor 920 is configured to check whether the UE is in the coverage area of the base station 900 according to an uplink synchronization rule, or to check whether the UE is in the coverage area of the base station 900 according to a rule carried in the first check instruction, or to check whether the UE is in the coverage area of the base station 900 according to a preset rule.

Optionally, as another embodiment, the first check instruction further carries frequency point information of the base station 900, where the check processor 920 is configured to: in the circumstance that the first check instruction further carries the frequency point information of the base station 900, check whether the UE is in the coverage area of the base station 900.

According to the embodiment of the present application, the foregoing another base station is a macro base station and the base station 900 is a micro base station.

Optionally, as another embodiment, the configuration processor 930 further performs multiflow deconfiguration according to a deconfiguration instruction sent by the first radio network controller.

Optionally, as another embodiment, the configuration processor 930 further sends a deconfiguration request to a first RNC according to the quality of an air interface channel and receives the deconfiguration instruction, which is sent by the first radio network controller according to the deconfiguration request, and the base station 900 performs multiflow deconfiguration according to the deconfiguration instruction.

According to the embodiment of the present application, the base station 900 is controlled by the first radio network controller, or the base station 900 is controlled by a second radio network controller, where the base station 900 communicates with the first radio network controller through a port between the first radio network controller and the second radio network controller.

According to the embodiment of the present application, the identification information of the UE includes an uplink scramble code corresponding to the UE and/or an uplink DPCCH channelization code and/or a timeslot format of an uplink high-speed dedicated physical control channel.

FIG. 10 is a schematic structural diagram of a radio network controller 1000 according to Embodiment 11 of the present application. The radio network controller 1000 shown in FIG. 10 corresponds to the method shown in FIG. 3, which is not described herein again. The radio network controller 1000 includes: a transmitter 1010 and a configuration processor 1020.

The transmitter 1010 is configured to: in the circumstance that a UE has established a connection with a first base station, send a first check instruction to a second base station, where the first base station is controlled by the radio network controller 1000 and the first check instruction includes identification information of the UE, so that the second base station checks whether the UE is in a coverage area of the second base station. The configuration processor 1020 is configured to perform multiflow configuration according to information sent by the UE that the UE is detected to be in the coverage area of the second base station, so that a cell of the first base station and a cell of the second base station jointly provide multiflow service to the UE as multiflow serving cells.

In the embodiment of the present application, a radio network controller may instruct a second base station to check whether a UE that has established a connection with a first base station is in a coverage area of the second base station, and perform multiflow configuration according to a check result, so that the first base station and the second base station jointly provide multiflow service to the UE. Since, according to the embodiment of the present application, when multiflow configuration is performed, less signaling exchange occurs, the system resource consumption is reduced.

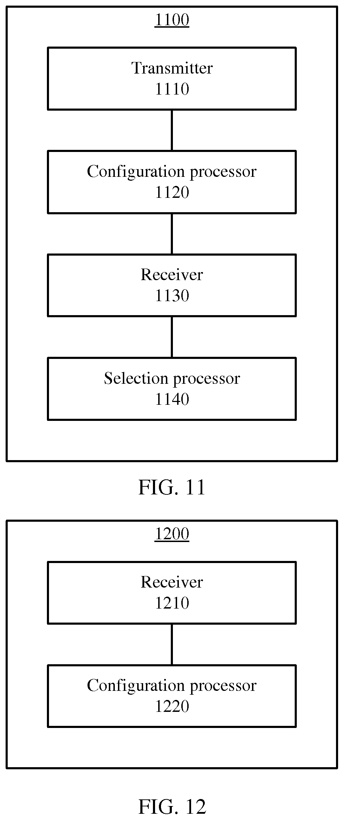

FIG. 11 is a schematic structural diagram of a radio network controller 1100 according to Embodiment 12 of the present application. The radio network controller 1100 includes: a transmitter 1110 and a configuration processor 1120. The transmitter 1110 and configuration processor 1120 shown in FIG. 11 are similar to the transmitter 1010 and configuration processor 1020 shown in FIG. 10, which are not described herein again.

Optionally, as another embodiment, the radio network controller further includes a receiver 1130, which is configured to receive a first check response, which is sent by a second base station according to a check result, where the first check response is used to indicate that the UE is in a coverage area of the second base station.

Optionally, as another embodiment, the transmitter 1110 further sends multiflow configuration information to a first base station, the second base station, and the UE according to the first check response, so that the first base station, the second base station, and the UE perform multiflow configuration according to the multiflow configuration information.

Optionally, as another embodiment, the transmitter 1110 further sends multiflow configuration information to the second base station and the UE, and after the first check response sent by the second base station is received, send a configuration instruction to a first base station and the second base station, so that the first base station and the second base station perform multiflow configuration according to the configuration instruction and the multiflow configuration information.

Optionally, as another embodiment, the transmitter 1110 further sends reconfiguration signaling to the UE, to instruct the UE to perform multiflow configuration according to the multiflow configuration information

Optionally, as another embodiment, the configuration instruction further carries an activation time that is used to instruct the first base station and the second base station to perform, according to the multiflow configuration information within the activation time, the multiflow configuration.

Optionally, as another embodiment, the radio network controller 1100 shown in FIG. 11 further includes: a receiver 1130 that is configured to: when the UE accesses the first base station, receive measurement information of the second base station reported by the UE, where the transmitter sends a first check instruction to the second base station according to the measurement information.

Optionally, as another embodiment, the transmitter 1110 further sends a second check instruction to a third base station, where the second check instruction includes the identification information of the UE, so that the third base station checks whether the UE is in a coverage area of the third base station; and in the circumstance that the first RNC receives the first check response from a second base station, sends a stop checking instruction to the third base station, so that the third base station stops checking whether the UE is in the coverage area of the third base station.

Optionally, as another embodiment, the radio network controller 1100 shown in FIG. 11 further includes: a receiver 1130 that is configured to receive a second check response from the third base station, where the second check response is used to indicate whether the UE is in the coverage area of the third base station; and a selection processor 1140 that is configured to: according to a preset rule, from a group that consists of the second base station and the third base station, select the second base station for the multiflow, where the transmitter further sends a first check instruction to the selected second base station.

According to the embodiment of the present application, the first base station is a macro base station and the second base station is a micro base station.

Optionally, as another embodiment, the transmitter 1110 is further configured to receive a deconfiguration request from the second base station and to send a deconfiguration instruction to the second base station and the UE, so that the second base station and the UE perform multiflow deconfiguration, or send a deconfiguration instruction to the second base station and the UE according to preset data scheduling condition, so that the second base station and the UE perform multiflow deconfiguration.

According to the embodiment of the present application, the second base station is controlled by the radio network controller 1100.

Optionally, as another embodiment, the second base station is controlled by a second radio network controller, where the second base station communicates with the radio network controller 1100 through ports between the second radio network controller and the radio network controller 1100.

According to the embodiment of the present application, the identification information includes an uplink scramble code corresponding to a UE and/or an uplink DPCCH channelization code and/or a timeslot format of an uplink high-speed dedicated physical control channel.

FIG. 12 is a schematic structural diagram of a UE 1200 according to Embodiment 13 of the present application. The UE establishes a connection with a first base station. The UE 1200 shown in FIG. 12 corresponds to the method shown in FIG. 4, which is not described herein again. The UE 1200 includes: a receiver 1210 and a configuration processor 1220.

The receiver 1210 is configured to receive multiflow configuration information from a first radio network controller, where the first base station is controlled by the first radio network controller, and receive physical layer signaling and/or radio resource control layer reconfiguration signaling, which is sent by a second base station, and the physical layer signaling and/or radio resource control layer reconfiguration signaling instructs the UE to perform, according to the multiflow configuration information, multiflow configuration. The configuration processor 1220 is configured to perform multiflow configuration according to the physical layer signaling and/or radio resource control layer reconfiguration signaling and the multiflow configuration information, so as to receive multiflow service provided by a cell of the first base station and a cell of the second base station to the UE as multiflow serving cells.

In the embodiment of the present application, a first radio network controller may instruct a second base station to check whether a UE that has established a connection with a first base station is in a coverage area of the second base station, and perform multiflow configuration according to a check result, so that the first base station and the second base station jointly provide multiflow service to the UE. Since, according to the embodiment of the present application, when multiflow configuration is performed, less signaling exchange occurs, the system resource consumption is reduced.

Optionally, as another embodiment, the receiver 1210 further receives reconfiguration signaling sent by the first radio network controller, where the reconfiguration signaling is used to instruct the UE to perform the multiflow configuration according to the multiflow configuration information.

Optionally, as another embodiment, the receiver 1210 further receives a deconfiguration instruction sent by the first radio network controller, and the configuration processor further performs multiflow deconfiguration according to the deconfiguration instruction.

An embodiment of the present application further provides a communication system, which may include the UE, the radio network controller and the base station of the foregoing embodiments.

According to the embodiment of the present application, in the circumstance of using multiflow in scenarios with small cells, signaling exchange can be effectively reduced and the reporting on a target small cell may be triggered rapidly, thereby making a UE better experience gains brought by multiflow.

A person of ordinary skill in the art may be aware that, in combination with the examples described in the embodiments disclosed in this specification, units and algorithm steps may be implemented by electronic hardware, or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present application.

It may be clearly understood by a person skilled in the art that, for the convenience and brevity of description, for a detailed working process of the foregoing system, apparatus, and unit, reference may be made to a corresponding process in the foregoing method embodiments, which are not described herein again.

In the several embodiments provided in the present application, it should be understood that the disclosed system, apparatus, and method may be implemented in other manners. For example, the previously described apparatus embodiments are merely exemplary. For example, division of the units is merely division based on logical functions and may be another division manner in actual implementation. For example, a plurality of units or components may be combined or integrated into another system, or some features may be ignored or not performed. In addition, the displayed or discussed mutual couplings or direct couplings or communication connections may be implemented through some interfaces; the indirect couplings or communication connections between the apparatuses or units may be implemented in electronic, mechanical or other forms.

The units described as separate parts may or may not be physically separate, and the components displayed as units may or may not be physical units, that is, may be located in one position, or may be distributed on a plurality of network units. A part or all of the units may be selected according to an actual need to achieve the objectives of the solutions of the embodiments.

In addition, functional units in the embodiments of the present application may be integrated into one processing unit, or each of the unit may exist alone physically, or two or more units are integrated into one unit.

When the functions are implemented in the form of a software functional unit and sold or used as an independent product, the functions may be stored in a computer-readable storage medium. Based on such an understanding, the technical solutions of the present application essentially, or the part contributing to the prior art, or a part of the technical solutions may be implemented in the form of a software product. The computer software product is stored in a storage medium and includes several instructions for instructing a computer device (which may be a personal computer, a server, or a network device) or a processor (processor) to perform all or a part of steps of the methods described in embodiments of the present application. The storage medium includes: any medium that can store program codes, such as a USB flash disk, a removable hard disk, a read-only memory (ROM, Read-Only Memory), a random access memory (RAM, Random Access Memory), a magnetic disk, or an optical disk.

The foregoing descriptions are merely specific implementation manners of the present application, but are not intended to limit the protection scope of the present application. Any variation or replacement readily figured out by a person skilled in the art within the technical scope disclosed in the present application shall fall within the protection scope of the present application. Therefore, the protection scope of the present application shall be subject to the protection scope of the claims.

## Claims

1. A method for configuring multiflow, comprising:
receiving (210), by a second base station, a first check instruction from a first radio network controller, wherein the first check instruction comprises identification information of a user equipment, UE, that has established a connection with a first base station and the first base station is controlled by the first radio network controller;
checking (220), by the second base station, whether the UE is in a coverage area of the second base station according to the first check instruction;
informing (230), by the second base station, the first radio network controller of information that the UE is detected to be in the coverage area of the second base station, so that the first radio network controller performs multiflow configuration according to the check result; and
performing (240), by the second base station, multiflow configuration according to a configuration instruction and multiflow configuration information that are sent by the first radio network controller, so that a cell of the first base station and a cell of the second base station jointly provide multiflow service to the UE as multiflow serving cells.

2. The configuration method according to claim 1, wherein the informing, by the second base station, the first radio network controller of the information that the UE is detected to be in the coverage area of the second base station comprises:
in the circumstance that the second base station detects that the UE is in the coverage area of the second base station, sending, by the second base station, a first check response to the first radio network controller, wherein the first check response is used for indicating that the UE is in the coverage area of the second base station.

3. The configuration method according to any one of claims 1 to 2, wherein the identification information of the UE comprises an uplink scramble code corresponding to the UE and/or a channelization code of an uplink high-speed dedicated physical control channel and/or a timeslot format of an uplink high-speed dedicated physical control channel.

4. A method for configuring multiflow, comprising:
in the circumstance that a user equipment, UE, has established a connection with a first base station, sending (310), by a first radio network controller, a first check instruction to a second base station, wherein the first base station is controlled by the first radio network controller and the first check instruction comprises identification information of the UE, so that the second base station checks whether the UE is in a coverage area of the second base station; and
performing (320), by the first radio network controller, multiflow configuration according to information sent by the UE that the UE is detected to be in the coverage area of the second base station, so that a cell of the first base station and a cell of the second base station jointly provide multiflow service to the UE as multiflow serving cells.

5. The configuration method according to claim 4, further comprising:
receiving, by the first radio network controller, a first check response, which is sent by the second base station according to a check result, wherein the first check response is used to indicate that the UE is in the coverage area of the second base station.

6. The configuration method according to claim 4 or 5, further comprising:
sending, by the first radio network controller, a second check instruction to a third base station, wherein the second check instruction comprises the identification information of the UE, so that the third base station checks whether the UE is in a coverage area of the third base station; and
in the circumstance that the first radio network controller receives the first check response from the second base station, sending, by the first radio network controller, a stop checking instruction to the third base station, so that the third base station stops checking whether the UE is in the coverage area of the third base station.

7. The configuration method according to any one of claims 4 to 6, wherein the identification information comprises an uplink scramble code corresponding to the UE and/or a channelization code of an uplink high-speed dedicated physical control channel and/or a timeslot format of an uplink high-speed dedicated physical control channel.

8. A method for configuring multiflow, comprising:
receiving (410), by a user equipment, UE, that has established a connection with a first base station, multiflow configuration information from a first radio network controller, wherein the first base station is controlled by the first radio network controller;
receiving (420), by the UE, physical layer signaling and/or radio resource control layer reconfiguration signaling sent by a second base station, wherein the physical layer signaling and/or radio resource control layer reconfiguration signaling instructs the UE to perform, according to the multiflow configuration information, multiflow configuration; and
performing (430), by the UE, the multiflow configuration according to the physical layer signaling and/or radio resource control layer reconfiguration signaling and the multiflow configuration information, so as to receive multiflow service provided by a cell of the first base station and a cell of the second base station to the UE as multiflow serving cells.

9. The configuration method according to claim 8, further comprising:
receiving, by the UE, a deconfiguration instruction sent by the first radio network controller; and
performing, by the user equipment, multiflow deconfiguration according to the deconfiguration instruction.

10. Abase station, comprising:
a receiver (910), configured to receive a first check instruction sent by a first radio network controller, wherein the first check instruction comprises identification information of a user equipment, UE, that has established a connection with another base station and the another base station is controlled by the first radio network controller;
a check processor (920), configured to check whether the UE is in a coverage area of the base station according to the first check instruction;
an informing processor (930), configured to inform the first radio network controller of information that the UE is detected to be in the coverage area of the second base station, so that the first radio network controller performs multiflow configuration according to the check result; and
a configuration processor (940), configured to perform multiflow configuration according to a configuration instruction and multiflow configuration information that are sent by the first radio network controller, so that cells of the another base station and cells of the base station jointly provide multiflow service to the UE as multiflow serving cells.

11. The base station according to claim 10, wherein, when it is detected that the UE is in the coverage area of the base station, the informing processor (930) is further configured to send a first check response to the first radio network controller, wherein the first check response is used for indicating that the UE is in the coverage area of the base station.

12. The base station according to any one of claims 10 to 11, wherein, the identification information of the UE comprises an uplink scramble code corresponding to the UE and/or a channelization code of an uplink high-speed dedicated physical control channel and/or a timeslot format of an uplink high-speed dedicated physical control channel.

13. A radio network controller, comprising:
a transmitter (1010), configured to: in the circumstance that a user equipment, UE, has established a connection with a first base station, send a first check instruction to a second base station, wherein the first base station is controlled by the radio network controller and the first check instruction comprises identification information of the UE, so that the second base station checks whether the UE is in a coverage area of the second base station; and
a configuration processor (1020), configured to perform multiflow configuration according to information sent by the UE that the UE is detected to be in the coverage area of the second base station, so that a cell of the first base station and a cell of the second base station jointly provide multiflow service to the UE as multiflow serving cells.

14. The radio network controller according to claim 13, further comprising: a receiver, configured to receive a first check response, which is sent by the second base station according to a check result, wherein the first check response is used for indicating that the UE is in the coverage area of the second base station.

15. The radio network controller according to claim 13 or 14, wherein the transmitter (1010) is further configured to send a second check instruction to a third base station, wherein the second check instruction comprises the identification information of the UE, so that the third base station checks whether the UE is in a coverage area of the third base station, and in the circumstance that the transmitter receives the first check response sent by the second base station, the transmitter (1010) is further configured to send a stop checking instruction to the third base station, so that the third base station stops checking whether the UE is in the coverage area of the third base station.

16. A user equipment, UE, wherein the user equipment has established a connection with a first base station, the UE comprising:
a receiver (1210), configured to receive multiflow configuration information from the first radio network controller, wherein the first base station is controlled by the first radio network controller, and receive physical layer signaling and/or radio resource control layer reconfiguration signaling sent by a second base station, wherein the physical layer signaling and/or radio resource control layer reconfiguration signaling instructs the UE to perform, according to the multiflow configuration information, multiflow configuration; and
a configuration processor (1220), configured to perform the multiflow configuration according to the physical layer signaling and/or radio resource control layer reconfiguration signaling and the multiflow configuration information, so as to receive multiflow service provided by a cell of the first base station and a cell of the second base station to the UE as multiflow serving cells.

17. The UE according to claim 16, wherein, the receiver (1210) is further configured to receive a deconfiguration instruction sent by the first radio network controller, wherein the configuration processor further performs multiflow deconfiguration according to the deconfiguration instruction

## Patentansprüche

1. Verfahren zum Konfigurieren von Mehrfachfluss, umfassend:
Empfangen (210), durch eine zweite Basisstation, einer ersten Prüfanweisung von einer ersten Funknetzwerksteuerung, wobei die erste Prüfanweisung Kennungsinformationen einer Benutzerausrüstung, UE, die eine Verbindung mit einer ersten Basisstation hergestellt hat, umfasst und die erste Basisstation durch die erste Funknetzwerksteuerung gesteuert wird;
Prüfen (220), durch die zweite Basisstation, ob die UE sich in einem Abdeckungsbereich der zweiten Basisstation befindet, gemäß der ersten Prüfanweisung;
Informieren (230), durch die zweite Basisstation, der ersten Funknetzwerksteuerung, über eine Information, dass detektiert wurde, dass die UE sich im Abdeckungsbereich der zweiten Basisstation befindet, so dass die erste Funknetzwerksteuerung Mehrfachfluss-Konfiguration gemäß dem Prüfergebnis durchführt; und
Durchführen (240), durch die zweite Basisstation, von Mehrfachfluss-Konfiguration gemäß einer Konfigurationsanweisung und Mehrfachfluss-Konfigurationsinformationen, die durch die erste Funknetzwerksteuerung gesandt werden, so dass eine Zelle der ersten Basisstation und eine Zelle der zweiten Basisstation gemeinsam der UE Mehrfachflussdienst als Mehrfachfluss abwickelnde Zellen bereitstellen.

2. Konfigurationsverfahren nach Anspruch 1, wobei das Informieren, durch die zweite Basisstation, der ersten Funknetzwerksteuerung über die Information, dass detektiert wurde, dass die UE sich im Abdeckungsbereich der zweiten Basisstation befindet, umfasst:
in dem Fall, dass die zweite Basisstation detektiert, dass die UE sich im Abdeckungsbereich der zweiten Basisstation befindet, Senden, durch die zweite Basisstation, einer ersten Prüfantwort an die erste Funknetzwerksteuerung, wobei die erste Prüfantwort verwendet wird, um anzugeben, dass die UE sich im Abdeckungsbereich der zweiten Basisstation befindet.

3. Konfigurationsverfahren nach einem der Ansprüche 1 bis 2, wobei die Kennungsinformationen der UE einen mit der UE korrespondierenden Aufwärtsverbindung-Verschlüsselungscode und/oder einen Kanalisierungscode eines dedizierten physikalischen Aufwärtsverbindung-Hochgeschwindigkeit-Steuerkanals und/oder ein Zeitschlitzformat eines dedizierten physikalischen Aufwärtsverbindung-Hochgeschwindigkeit-Steuerkanals umfassen.

4. Verfahren zum Konfigurieren von Mehrfachfluss, umfassend:
in dem Fall, dass eine Benutzerausrüstung, UE, eine Verbindung mit einer ersten Basisstation hergestellt hat, Senden (310), durch eine erste Funknetzwerksteuerung, einer ersten Prüfanweisung an eine zweite Basisstation, wobei die erste Basisstation von der ersten Funknetzwerksteuerung gesteuert wird und die erste Prüfanweisung Kennungsinformationen der UE umfasst, so dass die zweite Basisstation prüft, ob die UE sich in einem Abdeckungsbereich der zweiten Basisstation befindet; und
Durchführen (320), durch die erste Funknetzwerksteuerung, von Mehrfachfluss-Konfiguration gemäß durch die UE gesandten Informationen, dass detektiert wurde, dass die UE sich im Abdeckungsbereich der zweiten Basisstation befindet, so dass eine Zelle der ersten Basisstation und eine Zelle der zweiten Basisstation gemeinsam der UE Mehrfachflussdienst als Mehrfachfluss abwickelnde Zellen bereitstellen.

5. Konfigurationsverfahren nach Anspruch 4, ferner umfassend:
Empfangen, durch die erste Funknetzwerksteuerung, einer ersten Prüfantwort, die durch die zweite Basisstation gemäß einem Prüfergebnis gesandt wird, wobei die erste Prüfantwort verwendet wird, um anzugeben, dass die UE sich im Abdeckungsbereich der zweiten Basisstation befindet.

6. Konfigurationsverfahren nach Anspruch 4 oder 5, ferner umfassend:
Senden, durch die erste Funknetzwerksteuerung, einer zweiten Prüfanweisung an eine dritte Basisstation, wobei die zweite Prüfanweisung die Kennungsinformationen der UE umfasst, so dass die dritte Basisstation prüft, ob die UE sich in einem Abdeckungsbereich der dritten Basisstation befindet; und
in dem Fall, dass die erste Funknetzwerksteuerung die erste Prüfantwort von der zweiten Basisstation empfängt, Senden, durch die erste Funknetzwerksteuerung, einer Anweisung zum Beenden des Prüfens an die dritte Basisstation, so dass die dritte Basisstation aufhört zu prüfen, ob die UE sich im Abdeckungsbereich der dritten Basisstation befindet.

7. Konfigurationsverfahren nach einem der Ansprüche 4 bis 6, wobei die Kennungsinformationen einen mit der UE korrespondierenden Aufwärtsverbindung-Verschlüsselungscode und/oder einen Kanalisierungscode eines dedizierten physikalischen Aufwärtsverbindung-Hochgeschwindigkeit-Steuerkanals und/oder ein Zeitschlitzformat eines dedizierten physikalischen Aufwärtsverbindung-Hochgeschwindigkeit-Steuerkanals umfassen.

8. Verfahren zum Konfigurieren von Mehrfachfluss, umfassend:
Empfangen (410), durch eine Benutzerausrüstung, UE, die eine Verbindung mit einer ersten Basisstation hergestellt hat, von Mehrfachfluss-Konfigurationsinformationen von einer ersten Funknetzwerksteuerung, wobei die erste Basisstation durch die erste Funknetzwerksteuerung gesteuert wird;
Empfangen (420), durch die UE, von Signalisierung der physikalischen Schicht und/oder Funkbetriebsmittel-Steuerschicht-Neukonfiguration-Signalisierung, gesandt durch eine zweite Basisstation, wobei die Signalisierung der physikalischen Schicht und/oder Funkbetriebsmittel-Steuerschicht-Neukonfiguration-Signalisierung die UE anweist, Mehrfachfluss-Konfiguration gemäß den Mehrfachfluss-Konfigurationsinformationen durchzuführen; und
Durchführen (430), durch die UE, der Mehrfachfluss-Konfiguration gemäß der Signalisierung der physikalischen Schicht und/oder Funkbetriebsmittel-Steuerschicht-Neukonfiguration-Signalisierung und den Mehrfachfluss-Konfigurationsinformationen, um Mehrfachflussdienst zu empfangen, der der UE durch eine Zelle der ersten Basisstation und eine Zelle der zweiten Basisstation als Mehrfachfluss abwickelnde Zellen bereitgestellt wird.

9. Konfigurationsverfahren nach Anspruch 8, ferner umfassend:
Empfangen, durch die UE, einer Konfigurationsaufhebungsanweisung, gesandt durch die erste Funknetzwerksteuerung; und
Durchführen, durch die Benutzerausrüstung, von Mehrfachfluss-Konfigurationsaufhebung gemäß der Konfigurationsaufhebungsanweisung.

10. Basisstation, umfassend:
einen Empfänger (910), konfiguriert zum Empfangen einer ersten Prüfanweisung, gesandt durch eine erste Funknetzwerksteuerung, wobei die erste Prüfanweisung Kennungsinformationen einer Benutzerausrüstung, UE, die eine Verbindung mit einer anderen Basisstation hergestellt hat, umfasst und die andere Basisstation durch die erste Funknetzwerksteuerung gesteuert wird;
einen Prüfprozessor (920), konfiguriert zum Prüfen, ob die UE sich in einem Abdeckungsbereich der Basisstation befindet, gemäß der ersten Prüfanweisung;
einen Informierungsprozessor (930), konfiguriert zum Informieren der ersten Funknetzwerksteuerung, über eine Information, dass detektiert wurde, dass die UE sich im Abdeckungsbereich der zweiten Basisstation befindet, so dass die erste Funknetzwerksteuerung Mehrfachfluss-Konfiguration gemäß dem Prüfergebnis durchführt; und
einen Konfigurationsprozessor (940), konfiguriert zum Durchführen von Mehrfachfluss-Konfiguration gemäß einer Konfigurationsanweisung und Mehrfachfluss-Konfigurationsinformationen, die durch die erste Funknetzwerksteuerung gesandt werden, so dass Zellen der anderen Basisstation und Zellen der Basisstation gemeinsam der UE Mehrfachflussdienst als Mehrfachfluss abwickelnde Zellen bereitstellen.

11. Basisstation nach Anspruch 10, wobei, wenn detektiert wird, dass die UE sich im Abdeckungsbereich der Basisstation befindet, der Informierungsprozessor (930) ferner konfiguriert ist, eine erste Prüfantwort an die erste Funknetzwerksteuerung zu senden, wobei die erste Prüfantwort verwendet wird, um anzugeben, dass die UE sich im Abdeckungsbereich der Basisstation befindet.

12. Basisstation nach einem der Ansprüche 10 bis 11, wobei die Kennungsinformationen der UE einen mit der UE korrespondierenden Aufwärtsverbindung-Verschlüsselungscode und/oder einen Kanalisierungscode eines dedizierten physikalischen Aufwärtsverbindung-Hochgeschwindigkeit-Steuerkanals und/oder ein Zeitschlitzformat eines dedizierten physikalischen Aufwärtsverbindung-Hochgeschwindigkeit-Steuerkanals umfassen.

13. Funknetzwerksteuerung, umfassend:
einen Sender (1010), konfiguriert zum: in dem Fall, dass eine Benutzerausrüstung, UE, eine Verbindung mit einer ersten Basisstation hergestellt hat, Senden einer ersten Prüfanweisung an eine zweite Basisstation, wobei die erste Basisstation durch die Funknetzwerksteuerung gesteuert wird und die erste Prüfanweisung Kennungsinformationen der UE umfasst, so dass die zweite Basisstation prüft, ob die UE sich in einem Abdeckungsbereich der zweiten Basisstation befindet; und
einen Konfigurationsprozessor (1020), konfiguriert zum Durchführen von Mehrfachfluss-Konfiguration gemäß durch die UE gesandten Informationen, dass detektiert wurde, dass die UE sich im Abdeckungsbereich der zweiten Basisstation befindet, so dass eine Zelle der ersten Basisstation und eine Zelle der zweiten Basisstation gemeinsam der UE Mehrfachflussdienst als Mehrfachfluss abwickelnde Zellen bereitstellen.

14. Funknetzwerksteuerung nach Anspruch 13, ferner umfassend: einen Empfänger, konfiguriert zum Empfangen einer ersten Prüfantwort, die gemäß einem Prüfergebnis durch die zweite Basisstation gesandt wird, wobei die erste Prüfantwort verwendet wird, um anzugeben, dass die UE sich im Abdeckungsbereich der zweiten Basisstation befindet.

15. Funknetzwerksteuerung nach Anspruch 13 oder 14, wobei der Sender (1010) ferner konfiguriert ist, eine zweite Prüfanweisung an eine dritte Basisstation zu senden, wobei die zweite Prüfanweisung die Kennungsinformationen der UE umfasst, so dass die dritte Basisstation prüft, ob die UE sich in einem Abdeckungsbereich der dritten Basisstation befindet, und in dem Fall, dass der Sender die durch die zweite Basisstation gesandte erste Prüfantwort empfängt, ist der Sender (1010) ferner konfiguriert, eine Anweisung zum Beenden des Prüfens an die dritte Basisstation zu senden, so dass die dritte Basisstation aufhört zu prüfen, ob die UE sich im Abdeckungsbereich der dritten Basisstation befindet.

16. Benutzerausrüstung, UE, wobei die Benutzerausrüstung eine Verbindung mit einer ersten Basisstation hergestellt hat, die UE umfassend:
einen Empfänger (1210), konfiguriert zum Empfangen von Mehrfachfluss-Konfigurationsinformationen von der ersten Funknetzwerksteuerung, wobei die erste Basisstation durch die erste Funknetzwerksteuerung gesteuert wird, und Empfangen von Signalisierung der physikalischen Schicht und/oder Funkbetriebsmittel-Steuerschicht-Neukonfiguration-Signalisierung, gesandt durch eine zweite Basisstation, wobei die Signalisierung der physikalischen Schicht und/oder Funkbetriebsmittel-Steuerschicht-Neukonfiguration-Signalisierung die UE anweist, Mehrfachfluss-Konfiguration gemäß den Mehrfachfluss-Konfigurationsinformationen durchzuführen; und
einen Konfigurationsprozessor (1220), konfiguriert zum Durchführen der Mehrfachfluss-Konfiguration gemäß der Signalisierung der physikalischen Schicht und/oder Funkbetriebsmittel-Steuerschicht-Neukonfiguration-Signalisierung und den Mehrfachfluss-Konfigurationsinformationen, um Mehrfachflussdienst zu empfangen, der UE durch eine Zelle der ersten Basisstation und eine Zelle der zweiten Basisstation als Mehrfachfluss abwickelnde Zellen bereitgestellt wird.

17. UE nach Anspruch 16, wobei der Empfänger (1210) ferner konfiguriert ist, eine durch die erste Funknetzwerksteuerung gesandte Konfigurationsaufhebungsanweisung zu empfangen, wobei der Konfigurationsprozessor ferner Mehrfachfluss-Konfigurationsaufhebung gemäß der Konfigurationsaufhebungsanweisung durchführt.

## Revendications

1. Procédé pour configurer un multiflux, consistant à :
recevoir (210), au moyen d'une deuxième station de base, une première instruction de vérification en provenance d'un premier dispositif de commande de réseau de radiocommunication, dans lequel la première instruction de vérification comprend des informations d'identification d'un équipement utilisateur (UE) qui a établi une connexion avec une première station de base et la première station de base est commandée par le premier dispositif de commande de réseau de radiocommunication ;
vérifier (220), au moyen de la deuxième station de base, si l'UE se trouve dans une zone de couverture de la deuxième station de base en fonction de la première instruction de vérification ;
informer (230), au moyen de la deuxième station de base, le premier dispositif de commande de réseau de radiocommunication d'informations selon lesquelles l'UE est détecté comme étant dans la zone de couverture de la deuxième station de base de telle sorte que le premier dispositif de commande de réseau de radiocommunication effectue une configuration multiflux en fonction du résultat de la vérification ; et
effectuer (240), au moyen de la deuxième station de base, une configuration multiflux en fonction d'une instruction de configuration et d'informations de configuration multiflux qui sont envoyées par le premier dispositif de commande de réseau de radiocommunication de telle sorte qu'une cellule de la première station de base et une cellule de la deuxième station de base offrent conjointement un service multiflux à l'UE sous la forme de cellules de desserte multiflux.

2. Procédé de configuration selon la revendication 1, dans lequel le fait d'informer, au moyen de la deuxième station de base, le premier dispositif de commande de réseau de radiocommunication des informations selon lesquelles l'UE est détecté comme étant dans la zone de couverture de la deuxième station de base consiste à :
dans le cas où la deuxième station de base détecte que l'UE se trouve dans la zone de couverture de la deuxième station de base, envoyer, au moyen de la deuxième station de base, une première réponse de vérification au premier dispositif de commande de réseau de radiocommunication, dans lequel la première réponse de vérification est utilisée pour indiquer que l'UE se trouve dans la zone de couverture de la deuxième station de base.

3. Procédé de configuration selon l'une quelconque des revendications 1 à 2, dans lequel les informations d'identification de l'UE comprennent un code de brouillage de liaison montante correspondant à l'UE et/ou un code de canalisation d'un canal de commande physique dédié à haut débit de liaison montante et/ou un format de créneau temporel d'un canal de commande physique dédié à haut débit de liaison montante.

4. Procédé pour configurer un multiflux, consistant à :
dans le cas où un équipement utilisateur (UE) a établi une connexion avec une première station de base, envoyer (310), au moyen d'un premier dispositif de commande de réseau de radiocommunication, une première instruction de vérification à une deuxième station de base, dans lequel la première station de base est commandée par le premier dispositif de commande de réseau de radiocommunication et la première instruction de vérification comprend des informations d'identification de l'UE de telle sorte que la deuxième station de base vérifie si l'UE se trouve dans une zone de couverture de la deuxième station de base ; et
effectuer (320), au moyen du premier dispositif de commande de réseau de radiocommunication, une configuration multiflux en fonction d'informations envoyées par l'UE selon lesquelles l'UE est détecté comme étant dans la zone de couverture de la deuxième station de base de telle sorte qu'une cellule de la première station de base et une cellule de la deuxième station de base offrent conjointement un service multiflux à l'UE sous la forme de cellules de desserte multiflux.

5. Procédé de configuration selon la revendication 4, consistant en outre à :
recevoir, au moyen du premier dispositif de commande de réseau de radiocommunication, une première réponse de vérification, qui est envoyée par la deuxième station de base en fonction d'un résultat de vérification, dans lequel la première réponse de vérification est utilisée pour indiquer que l'UE se trouve dans la zone de couverture de la deuxième station de base.

6. Procédé de configuration selon la revendication 4 ou 5, consistant en outre à :
envoyer, au moyen du premier dispositif de commande de réseau de radiocommunication, une seconde instruction de vérification à une troisième station de base, dans lequel la seconde instruction de vérification comprend les informations d'identification de l'UE de telle sorte que la troisième station de base vérifie si l'UE se trouve dans une zone de couverture de la troisième station de base ; et
dans le cas où le premier dispositif de commande de réseau de radiocommunication reçoit la première réponse de vérification de la deuxième station de base, envoyer, au moyen du premier dispositif de commande de réseau de radiocommunication, une instruction de vérification d'arrêt à la troisième station de base de telle sorte que la troisième station de base arrête de vérifier si l'UE se trouve dans la zone de couverture de la troisième station de base.

7. Procédé de configuration selon l'une quelconque des revendications 4 à 6, dans lequel les informations d'identification comprennent un code de brouillage de liaison montante correspondant à l'UE et/ou un code de canalisation d'un canal de commande physique dédié à haut débit de liaison montante et/ou un format de créneau temporel d'un canal de commande physique dédié à haut débit de liaison montante.

8. Procédé pour configurer un multiflux, consistant à :
recevoir (410), au moyen d'un équipement utilisateur (UE) qui a établi une connexion avec une première station de base, des informations de configuration multiflux en provenance d'un premier dispositif de commande de réseau de radiocommunication, dans lequel la première station de base est commandée par le premier dispositif de commande de réseau de radiocommunication ;
recevoir (420), au moyen de l'UE, une signalisation de couche physique et/ou une signalisation de reconfiguration de couche de commande de ressources radio envoyées par une deuxième station de base, dans lequel la signalisation de couche physique et/ou la signalisation de reconfiguration de couche de commande de ressources radio donnent comme instruction à l'UE d'effectuer, en fonction des informations de configuration multiflux, une configuration multiflux ; et
effectuer (430), au moyen de l'UE, la configuration multiflux en fonction de la signalisation de couche physique et/ou de la signalisation de reconfiguration de couche de commande de ressources radio et des informations de configuration multiflux de sorte à recevoir un service multiflux fourni par une cellule de la première station de base et par une cellule de la deuxième station de base à l'UE sous la forme de cellules de desserte multiflux.

9. Procédé de configuration selon la revendication 8, consistant en outre à :
recevoir, au moyen de l'UE, une instruction de déconfiguration envoyée par le premier dispositif de commande de réseau de radiocommunication ; et
effectuer, au moyen de l'équipement utilisateur, une déconfiguration multiflux en fonction de l'instruction de déconfiguration.

10. Station de base comprenant :
un récepteur (910), configuré pour recevoir une première instruction de vérification envoyée par un premier dispositif de commande de réseau de radiocommunication, dans laquelle la première instruction de vérification comprend des informations d'identification d'un équipement utilisateur (UE) qui a établi une connexion avec une autre station de base et l'autre station de base est commandée par le premier dispositif de commande de réseau de radiocommunication ;
un processeur de vérification (920), configuré pour vérifier si l'UE se trouve dans une zone de couverture de la station de base en fonction de la première instruction de vérification ;
un processeur d'information (930), configuré pour informer le premier dispositif de commande de réseau de radiocommunication d'informations selon lesquelles l'UE est détecté comme étant dans la zone de couverture de la deuxième station de base de telle sorte que le premier dispositif de commande de réseau de radiocommunication effectue une configuration multiflux en fonction du résultat de la vérification ; et
un processeur de configuration (940), configuré pour effectuer une configuration multiflux en fonction d'une instruction de configuration et d'informations de configuration multiflux qui sont envoyées par le premier dispositif de commande de réseau de radiocommunication de telle sorte que des cellules de l'autre station de base et des cellules de la station de base offrent conjointement un service multiflux à l'UE sous la forme de cellules de desserte multiflux.

11. Station de base selon la revendication 10, dans laquelle, lorsqu'il est détecté que l'UE se trouve dans la zone de couverture de la station de base, le processeur d'information (930) est en outre configuré pour envoyer une première réponse de vérification au premier dispositif de commande de réseau de radiocommunication, dans laquelle la première réponse de vérification est utilisée pour indiquer que l'UE se trouve dans la zone de couverture de la station de base.

12. Station de base selon l'une quelconque des revendications 10 à 11, dans laquelle les informations d'identification de l'UE comprennent un code de brouillage de liaison montante correspondant à l'UE et/ou un code de canalisation d'un canal de commande physique dédié à haut débit de liaison montante et/ou un format de créneau temporel d'un canal de commande physique dédié à haut débit de liaison montante.

13. Dispositif de commande de réseau de radiocommunication, comprenant :
un émetteur (1010), configuré pour : dans le cas où un équipement utilisateur (UE) a établi une connexion avec une première station de base, envoyer une première instruction de vérification à une deuxième station de base, dans lequel la première station de base est commandée par le dispositif de commande de réseau de radiocommunication et la première instruction de vérification comprend des informations d'identification de l'UE de telle sorte que la deuxième station de base vérifie si l'UE se trouve dans une zone de couverture de la deuxième station de base ; et
un processeur de configuration (1020), configuré pour effectuer une configuration multiflux en fonction d'informations envoyées par l'UE selon lesquelles l'UE est détecté comme étant dans la zone de couverture de la deuxième station de base de telle sorte qu'une cellule de la première station de base et une cellule de la deuxième station de base offrent conjointement un service multiflux à l'UE sous la forme de cellules de desserte multiflux.

14. Dispositif de commande de réseau de radiocommunication selon la revendication 13, comprenant en outre : un récepteur, configuré pour recevoir une première réponse de vérification, qui est envoyée par la deuxième station de base en fonction d'un résultat de vérification, dans lequel la première réponse de vérification est utilisée pour indiquer que l'UE se trouve dans la zone de couverture de la deuxième station de base.

15. Dispositif de commande de réseau de radiocommunication selon la revendication 13 ou 14, dans lequel l'émetteur (1010) est en outre configuré pour envoyer une seconde instruction de vérification à une troisième station de base, dans lequel la seconde instruction de vérification comprend les informations d'identification de l'UE de telle sorte que la troisième station de base vérifie si l'UE se trouve dans une zone de couverture de la troisième station de base ; et dans le cas où l'émetteur reçoit la première réponse de vérification envoyée par la deuxième station de base, l'émetteur (1010) est en outre configuré pour envoyer une instruction de vérification d'arrêt à la troisième station de base de telle sorte que la troisième station de base arrête de vérifier si l'UE se trouve dans la zone de couverture de la troisième station de base.

16. Équipement utilisateur (UE), dans lequel l'équipement utilisateur a établi une connexion avec une première station de base, l'UE comprenant :
un récepteur (1210), configuré pour recevoir des informations de configuration multiflux en provenance du premier dispositif de commande de réseau de radiocommunication, dans lequel la première station de base est commandée par le premier dispositif de commande de réseau de radiocommunication et recevoir une signalisation de couche physique et/ou une signalisation de reconfiguration de couche de commande de ressources radio envoyées par une deuxième station de base, dans lequel la signalisation de couche physique et/ou la signalisation de reconfiguration de couche de commande de ressources radio donnent comme instruction à l'UE d'effectuer, en fonction des informations de configuration multiflux, une configuration multiflux ; et
un processeur de configuration (1220), configuré pour effectuer la configuration multiflux en fonction de la signalisation de couche physique et/ou de la signalisation de reconfiguration de couche de commande de ressources radio et des informations de configuration multiflux de sorte à recevoir un service multiflux fourni par une cellule de la première station de base et par une cellule de la deuxième station de base à l'UE sous la forme de cellules de desserte multiflux.

17. UE selon la revendication 16, dans lequel le récepteur (1210) est en outre configuré pour recevoir une instruction de déconfiguration envoyée par le premier dispositif de commande de réseau de radiocommunication, dans lequel le processeur de configuration effectue en outre une déconfiguration multiflux en fonction de l'instruction de déconfiguration.
